# EUROPEAN PATENT APPLICATION

(11) **EP 4 703 897 A1**
(43) Date of publication of application: **04.03.2026**
(21) Application number: 25190803.4
(22) Date of filing: 21.07.2025
(51) Int. Cl.: G06F 13/20

(54) **MEMORY ACCESS FOR MULTI-CHIPLET SYSTEM-IN-PACKAGE**

(30) Priority: 30.08.2024 US 202418821583
(71) Applicant: Intel Corporation, Santa Clara, CA 95054 (US)
(72) Inventor: SOOD, Kapil, Washougal 98671 (US); LAKKAKULA, Naveen, Chandler 85286 (US); MOSUR, Lokpraveen Bhupathy, Gilbert 85297 (US); BEKER, Vladimir, 4075803 Ariel (IL); LIU, Yen-Cheng, Portland 97229 (US); SCHMOLE, Filip, Portland 97214 (US); FLEMING, Patrick, R14 W642 Slatt Wolfhill (IE); SHACHAM, Liron, 3091693 Zichron Yaakov (IL)
(74) Representative: Maiwald GmbH

(57) **Abstract**

Systems, apparatus, articles of manufacture, and methods are disclosed for memory access for multi-chiplet system-in-package. Example instructions cause at least one circuit in a system-in-package (SiP) to reserve a region in a memory associated with the SiP for exclusive use by a first die of the SiP apart from a second die of the SiP. For example, the memory is for use by multiple, respective, dies of the SiP.

## Description

### BACKGROUND

The electronics industry has moved towards more compact designs for integrated circuits. Electronics manufacturers have developed compact circuit designs such as a system on a chip (SoC) or a system in a package (SiP). SoCs and SiPs include most or all of the components of an electrical system. A SoC typically integrates components onto a single semiconductor die while a SiP typically includes multiple integrated circuits that are themselves integrated on a substrate within a carrier package. An integrated circuit used in a SiP includes a semiconductor die and is sometimes referred to as a tile or a chiplet.

### BRIEF DESCRIPTION OF THE DRAWINGS

FIG. 1 is a block diagram of an example system including an example trusted circuit within a trust boundary of the system in accordance with teachings of this disclosure.
FIG. 2 is a block diagram of an example system in a package (SiP) having a memory and interconnect architecture for secure access to example memory by an example chiplet.
FIG. 3 is a block diagram illustrating example communication between the one or more core chiplets, the one or more memory and input/output (I/O) controllers, and the chiplet of FIG. 2 to block access to the chiplet reserved memory (CRM) region of the memory of FIG. 2.
FIG. 4 is a block diagram illustrating example communication between the one or more core chiplets, the one or more memory and I/O controllers, and the chiplet of FIG. 2 to allow access to the CRM region of the memory of FIG. 2.
FIG. 5 is a block diagram illustrating example operation of the chiplet of FIG. 2 to control access to the CRM region of the memory of FIG. 2 when the chiplet includes one type of accelerator circuit.
FIG. 6 is a block diagram illustrating example operation of the chiplet of FIG. 2 to control access to the CRM region of the memory of FIG. 2 when the chiplet includes more than one type of accelerator circuit.
FIG. 7 is a flowchart representative of example machine-readable instructions and/or example operations that may be executed, instantiated, and/or performed by example programmable circuitry to implement the one or more core chiplets of FIG. 2.
FIG. 8 is a flowchart representative of example machine-readable instructions and/or example operations that may be executed, instantiated, and/or performed by example programmable circuitry to implement the one or more memory and I/O controllers of FIG. 2.
FIG. 9 is a flowchart representative of example machine-readable instructions and/or example operations that may be executed, instantiated, and/or performed by example programmable circuitry to implement the chiplet of FIG. 2.
FIG. 10 is a block diagram of an example implementation of the chiplet of FIG. 2.
FIG. 11 is a block diagram of the one or more designated vendor-specific extended capability (DVSEC) registers of FIG. 10.
FIG. 12 is a block diagram illustrating an example implementation of the trusted execution environment (TEE) device interface security protocol (TDISP) state of FIG. 10.
FIG. 13A is a block diagram illustrating a first example header including an example T-bit.
FIG. 13B is a block diagram illustrating a second example header including an example T-bit.
FIG. 14 is a flow diagram representative of an example state machine of the one or more trusted device interface (TDI) states that is managed by the TDISP processor circuit of FIG. 10.
FIG. 15 is a flowchart representative of example machine-readable instructions and/or example operations that may be executed, instantiated, and/or performed by example programmable circuitry to implement the host interface (HI) circuit of FIG. 10 to issue a memory read request.
FIG. 16 is a flowchart representative of example machine-readable instructions and/or example operations that may be executed, instantiated, and/or performed by example programmable circuitry to implement the chiplet of FIG. 10 to process incoming memory read completions from the memory.
FIG. 17 is a flowchart representative of example machine-readable instructions and/or example operations that may be executed, instantiated, and/or performed by example programmable circuitry to implement the HI circuit of FIG. 10 to issue memory write requests to the memory.
FIG. 18 is a flowchart representative of example machine-readable instructions and/or example operations that may be executed, instantiated, and/or performed by example programmable circuitry to implement the HI circuit of FIG. 10 to handle a memory access request from a host of the SiP.
FIG. 19 is a flowchart representative of example machine-readable instructions and/or example operations that may be executed, instantiated, and/or performed by example programmable circuitry to implement the HI circuit of FIG. 10 to generate a completion for a memory access request from a host of the SiP.
FIG. 20 is a flowchart representative of example machine-readable instructions and/or example operations that may be executed, instantiated, and/or performed by example programmable circuitry to implement the chiplet of FIG. 10 to issue memory address translation service (ATS) translation requests to the memory.
FIG. 21 is a flowchart representative of example machine-readable instructions and/or example operations that may be executed, instantiated, and/or performed by example programmable circuitry to implement the chiplet of FIG. 10 to issue a translated memory access request.
FIG. 22 is a flowchart representative of example machine-readable instructions and/or example operations that may be executed, instantiated, and/or performed by example programmable circuitry to implement the chiplet of FIG. 10 to process incoming memory access completions with translated addresses.
FIG. 23 is a block diagram of an example processing platform including programmable circuitry structured to execute, instantiate, and/or perform the example machine-readable instructions and/or perform the example operations of FIGS. 7-9 and/or 15-22 to implement the chiplet, the one or more core chiplets, the one or more memory and I/O controllers, and/or the HI circuit of FIGS. 2-6 and/or 10.
FIG. 24 is a block diagram of an example implementation of the programmable circuitry of FIG. 23.
FIG. 25 is a block diagram of another example implementation of the programmable circuitry of FIG. 23.

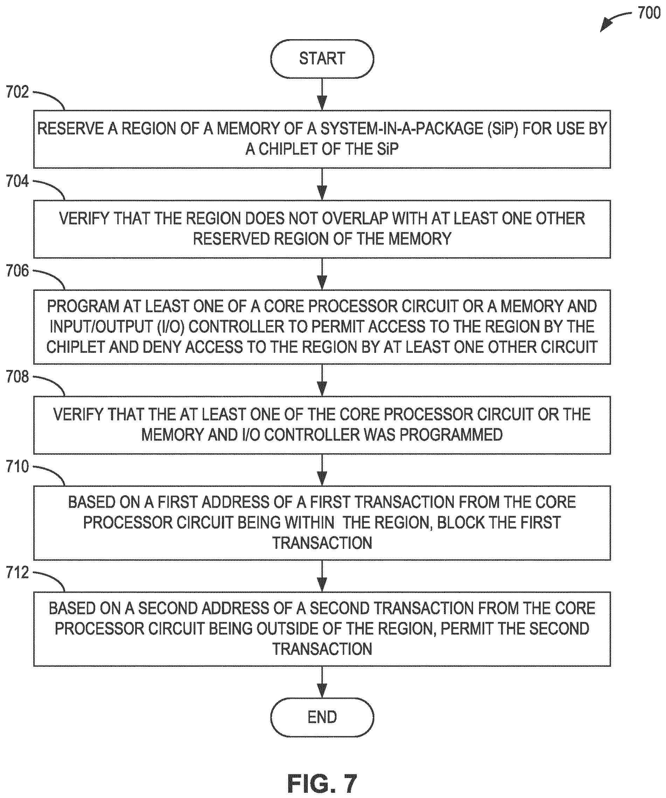

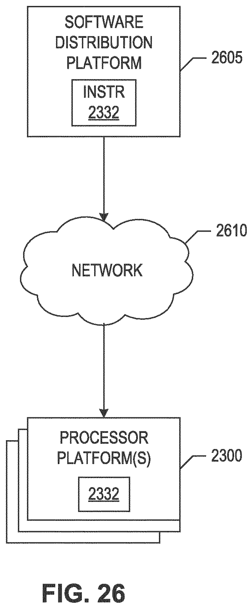

FIG. 26 is a block diagram of an example software/firmware/instructions distribution platform (e.g., one or more servers) to distribute software, instructions, and/or firmware (e.g., corresponding to the example machine-readable instructions of FIGS. 7-9 and/or 15-22) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

SiPs typically include multiple integrated circuits (ICs) (e.g., dies, tiles, chiplets) that are collectively integrated within a same carrier package. In some examples, tiles, chiplets, and/or dies are modular ICs, and two or more such modular ICs may together form a SoC or SiP. In some examples, a chiplet is located in a package with one or more other chiplets. For example, the ICs are stacked using package on package mounting, placed side by side, and/or embedded in or on a substrate of the SiP. Package on package mounting includes coupling one or more leads of a first IC package to one or more leads of a second IC package to combine the first and second ICs vertically with respect to a substrate on which one of the first or second ICs is disposed. For example, the leads of the first and second ICs may be implemented by electrical pads that are interconnected via a ball grid array (BGA) or other surface mount technology (SMT).

SiPs can include multiple chiplets in the same package where each chiplet includes multiple accelerator circuits and each accelerator circuit operates as a root complex integrated endpoint device (RCiEP). For example, an RCiEP is a type of device defined by the Peripheral Component Interconnect (PCI) Express (PCIe) standard as an integrated device (e.g., integrated within a semiconductor package) that connects a central processor unit (CPU) and memory subsystem to a PCIe switch fabric including one or more PCIe or PCI devices. As such, accelerator circuits in a multi-chiplet-based SiP behave like PCIe devices from the perspective of software but are connected to a central processor unit (CPU) and/or other processor circuitry via one or more Universal Chiplet Interconnect (UCI) Express (UCIe) compliant physical connections. In some examples, physical connections between chiplets and dies (e.g., chiplet-to-chiplet interconnects, die-to-die interconnects, etc.) are compliant with other standards or specifications such as a Bunch of Wires (BoW) specification, a Cache Coherent Interconnect for Accelerators (CCIX) specification, a Advanced Interface Bus (AIB) standard, a 112 gigabit per second (Gbps) (112G) specification, or an Open high Bandwidth Interconnect (OpenHBI) specification, among others.

Example accelerator circuits include an artificial intelligence (AI) accelerator circuit, a graphics processor unit (GPU) accelerator circuit, quick assist technology (QAT) accelerator circuit, a network interface card (NIC) accelerator circuit, a virtual radio access network (vRAN) accelerator circuit, a turbo intellectual property (IP) (TIP) accelerator circuit (e.g., for 5^{th} generation (5G) network encoding in a vRAN), an infrastructure processing unit (IPU) accelerator circuit, among others.

For example, a QAT accelerator circuit is circuitry that can perform cryptographic functions (e.g., encryption, decryption, etc.), compression, and/or decompression more efficiently than a general-purpose processor core. In some examples, a QAT accelerator circuit is used for encryption and/or decryption of network traffic in virtual private network (VPNs), load balancers, content delivery networks (CDNs), and web servers. Other example accelerator circuits are possible such as inference engine accelerator circuits, tensor processing unit (TPU) accelerator circuits, neural processing unit (NPU) accelerator circuits, AI kernel processor (AKP) accelerator circuits, 5G and/or 6^{th} generation (6G) network accelerator circuits, and I/O accelerator circuits.

Additionally, chiplets in a multi-chiplet-based SiP may be interconnected using an interconnect protocol. Compute Express Link (CXL) protocols are one type of interconnect protocol and include the CXL protocol for cache-coherent accesses to system memory (CXL.cache or CXL.$), the CXL protocol for device memory (CXL.Mem), or the CXL protocol for PCIe-based input/output (I/O) devices (CXL.IO/PCIe). In a SiP, a chiplet may connect to the SiP memory fabric utilizing multiple data paths (e.g., CXL.$ and CXL.IO) concurrently. For example, in a SiP, a chiplet may connect to an integrated memory and I/O tile of the SiP via three CXL.$ lanes and one or more CXL.IO/PCIe lanes.

To execute an AI model at the edge of a network, an edge device includes memory for an AI and/or graphics kernel processing unit to utilize. The memory is local to the edge device and can be implemented as an attached memory, as a high bandwidth memory (HBM), among others. An AI model (e.g., a vision transformer (ViT) model, a variable ViT (VViT) model, a generative pre-trained transformer (GPT) model (e.g., GPT4, GPT5, etc.), etc.) and/or data associated with an AI model may be confidential and/or proprietary. As such, an entity managing an AI model and/or data associated with an AI model may not deploy and/or otherwise access the AI model and/or the data at an edge device without the assurance that the AI model and/or the data is protected at the edge device.

That is, in order for a tenant to execute an inference with an AI model on an edge device, the tenant may require the confidentiality and integrity of the AI model to be maintained (e.g., an AI model and/or data associated with an AI model should be protected from platform untrusted software). As such, to facilitate the adoption of AI, edge service providers should ensure that tenants have confidence when deploying AI models and/or accessing data associated with an AI model at the edge. Some confidential computing technology (e.g., software guard extensions (SGX), trust domain extensions (TDX), Advanced Micro Devices (AMD) secure encrypted virtualization (SEV), etc.) is limited to core processor circuits of a device.

In such examples, the trusted domain and/or enclave within which confidential and/or proprietary data is accessed cannot be extended to an accelerator circuit and/or an I/O device of a system. For example, when confidential computing (e.g., SGX, TDX, AMD SEV, etc.) is enabled on a system, the trust domain (e.g., core processor circuit within the trust boundary) considers the host operating system (OS), basic input/output system (BIOS) instructions, system software, etc. to be untrusted software and potentially hostile and/or malicious. When confidential computing is not enabled on a system, the trust domain considers the host OS and system software as untrusted software and considers BIOS instructions as trusted.

Additionally, for example, in a system including an external PCIe connected, discrete device, confidential computing techniques do not include the external PCIe connected device in the trust boundary. As such, the external PCIe connected device cannot access trusted memory within a core processor circuit. Instead, encrypted confidential and/or proprietary data is sent from the external PCIe connected device and buffered in a shared memory of the system. Then, the core processor circuit of the system accesses the data from the buffer and decrypts the data within the trust boundary. Such data movement imposes a large overhead, for example, due to encryption and/or decryption of data. As such, tenants utilizing a multi-chiplet SiP at the edge may not be able to use an accelerator circuit of the SiP that they would otherwise be able to use in a cloud computing context.

That is, because an accelerator circuit is not within the trust boundary of the SiP and an edge device is relatively less physically secure than a similar device deployed in a data center, a tenant may not utilize the accelerator circuit. As such, tenant workloads that require an accelerator circuit may be broken when deployed at the edge if a tenant will not execute a workload on an accelerator circuit that is not within a trust domain of an edge device. Additionally, if a tenant runs a workload on a core processor circuit when the workload is designed to be executed on an accelerator circuit, the workload may experience a 30% or more decrease in performance.

Additionally, it is infeasible for an integrated AI accelerator circuit on a chiplet to have a dedicated attached memory (e.g., a double data rate (DDR) memory, a low power DDR (LPDDR) memory, etc.). For example, due to the high monetary cost and form factor of memory as well as latency and performance requirements of AI accelerator circuits, utilizing a dedicated attached memory for an integrated AI accelerator circuit is infeasible. As such, an integrated accelerator circuit utilizes system memory and is not within the trust boundary of the system as described above.

To facilitate widespread adoption of AI at the edge, the trust boundary in multiple, disaggregated tile devices (e.g., central processor units (CPUs), xPUs, and/or edge processor units (EPUs), etc.) should be extended to integrated I/O devices and/or integrated accelerator circuits. Advantageously, examples disclosed herein include a memory fabric and interconnect architecture including the capability to deliver a secure reserved portion of memory within a system memory. Additionally, examples disclosed herein include access control for a reserved portion of memory to ensure that the reserved portion of memory is segregated from other portions (e.g., pools) of the system memory.

As such, one or more accelerator circuits of a chiplet of a system can utilize a reserved portion of memory as a secured memory that is trusted. Thus, a tenant of an edge device can utilize an AI accelerator circuit of the edge device to run an AI workload whether or not the AI workload is executed in a confidential computing environment (e.g., SGX, TDX, AMD SEV, etc.). Additionally, examples disclosed herein extend confidential computing to multi-tile devices with multiple interface(s), such as CXL.IO and CXL.$, concurrently carrying trusted traffic.

For example, examples disclosed herein include a device-side implementation for integrated accelerator circuits that are located on different tile(s) interconnected by multiple die-to-die data movement protocols like CXL.$/UCIe and CXL.IO/PCIe. As such, an integrated accelerator circuit can access a reserved portion of system memory, traversing over CXL.$/UCIe and CXL.io/PCIe data lanes simultaneously. Thus, examples disclosed herein include a scalable memory and interconnect fabric architecture that can address multiple configurations of chiplets in a SiP and/or a SoC.

As described above, examples disclosed herein include tiles sending traffic over multiple protocols, such as CXL.$ and CXL.IO, concurrently. Accordingly, examples disclosed herein include a device-side security architecture to extend core-centric trust domains and enclaves to trusted I/O devices and accelerator circuits that are integrated on a system-in-package (SiP) multi-tile processor.

Examples disclosed herein include a device-side security architecture and implementation for extending trust domains to I/O devices and accelerator circuits. Additionally, examples disclosed herein include a device processor architecture for establishing device trust and ensuring that a device can address cryptographic isolation and access control security requirements. As such, disclosed methods, apparatus, and articles of manufacture provide security enhancements to a device, one or more chiplets and/or ICs used in the device, a fabric that is used to interconnect circuits within the device, and various attested measurement and reporting requirements. Thus, tenants can seamlessly run workloads on a trusted core processor circuit and/or a trusted accelerator circuit.

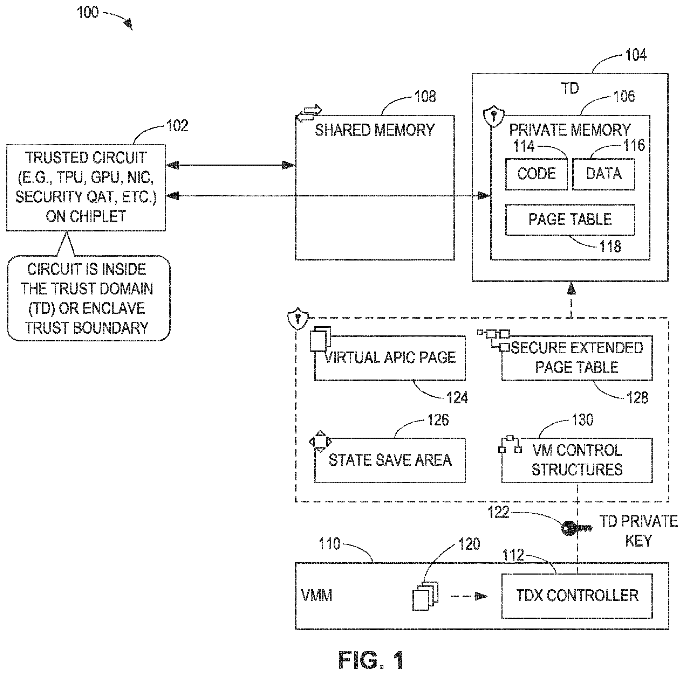

FIG. 1 is a block diagram of an example system 100 including an example trusted circuit 102 within a trust boundary of the system 100 in accordance with teachings of this disclosure. In the example of FIG. 1, the system 100 includes the trusted circuit 102, an example trust domain (TD) 104 including an example private memory 106, an example shared memory 108, and an example virtual machine manager (VMM) 110. In the example of FIG. 1, the VMM 110 includes an example TDX controller 112. In the example of FIG. 1, the trusted circuit 102 is implemented by an accelerator circuit, as described above, integrated on a chiplet, a tile, a die, and/or within another component of a SiP. For example, the trusted circuit 102 is at least one of a TPU accelerator circuit, a GPU accelerator circuit, a NIC accelerator circuit, a security QAT accelerator circuit, among others.

In the illustrated example of FIG. 1, the TD 104 is implemented by one or more core processor circuits implementing a trusted execution environment (TEE). In the example of FIG. 1, the TD 104 reserves a portion of the shared memory 108 for exclusive use by the one or more core processor circuits as the private memory 106. For example, the one or more core processor circuits utilize a proprietary low bandwidth interface to connect to the private memory 106. As such, example code 114, example data 116, and an example page table 118 stored in the private memory 106 are secured and protected from untrusted software of the system 100.

In the illustrated example of FIG. 1, the TDX controller 112 of the VMM 110 establishes the TD 104 within the private memory 106 in accordance with TDX confidential computing practices based on example memory pages 120. For example, the TDX controller 112 utilizes an example TD private key 122 to secure an example virtual advanced programmable interrupt controller memory page 124, an example state save area 126, an example secure extended page table 128, and example virtual machine (VM) control structures 130 within the private memory 106 to establish the TD 104.

Additionally, in accordance with teachings of this disclosure, the trusted circuit 102 is within the trust boundary of the TD 104 and can access confidential and/or proprietary data directly from the private memory 106. As such, the trusted circuit 102 can utilize an internal interface (e.g., a CXL.$/UCIe interface) and an external interface (e.g., a CXL.IO/PCIe interface) concurrently to securely access the code 114 and/or the data 116 of the private memory 106. Accordingly, a tenant of the system 100 can utilize the trusted circuit 102 (e.g., an accelerator circuit) to process confidential and/or proprietary workloads (e.g., AI workloads) with confidence that the confidential and/or proprietary workloads are secured.

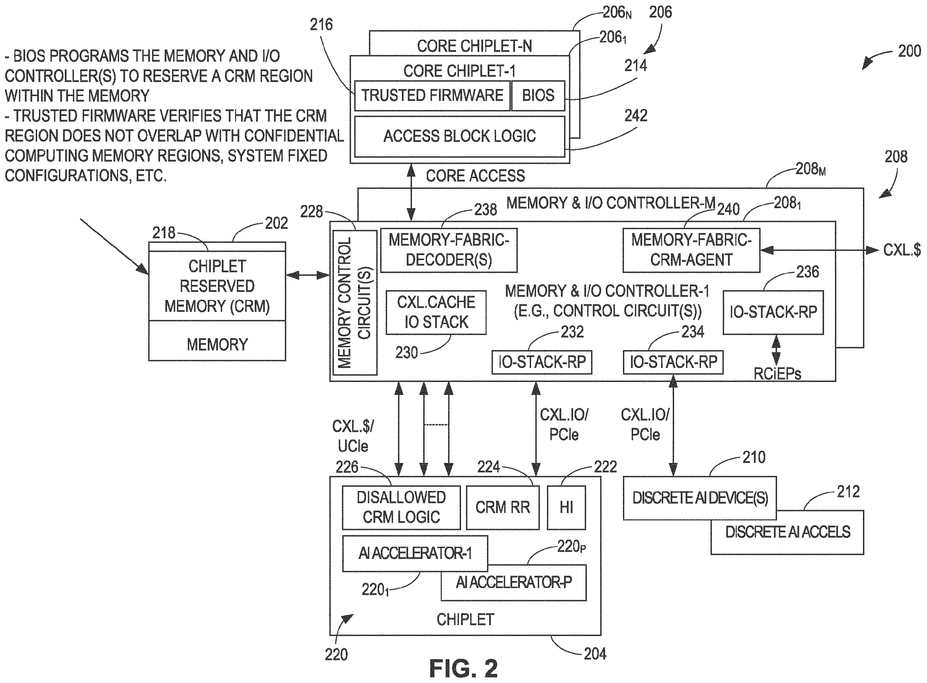

FIG. 2 is a block diagram of an example system in a package (SiP) 200 having a memory and interconnect architecture for secure access to example memory 202 by an example chiplet 204. In the example of FIG. 2, the SiP 200 includes the example chiplet 204, one or more example core chiplets 206, and one or more example memory and input/output (I/O) controllers 208. In the example of FIG. 2, the one or more memory and I/O controllers 208 are coupled to one or more discrete devices external to the SiP 200. For example, the one or more memory & I/O controllers 208 are coupled to one or more example discrete AI devices 210 and one or more example discrete AI accelerator circuits 212.

In the illustrated example of FIG. 2, the memory 202 includes one or more memory banks that are coupled to the one or more memory and I/O controllers 208 via a standard interface protocol such as DDR, LPDDR, HBM, CXL.Mem, among others. For example, the memory 202 is implemented by dynamic random-access memory (DRAM) that is external to the SiP 200 and shares a motherboard and/or substrate with the SiP 200. For example, the memory 202 is implemented on a die that is integrated within a separate package from the SiP 200. In some examples, the memory 202 is implemented by DRAM that is local to (e.g., within) the SiP 200. For example, the memory 202 is implemented on a die within the SiP 200. Additionally or alternatively, the memory 202 is a virtual memory and/or is remote with respect to the SiP 200 (e.g., in a different location than the SiP 200).

In this manner, the memory 202 is usable by one or more die, chiplets, tiles, etc. of the SiP 200. As described herein, the memory 202 includes a region reserved for exclusive use by the chiplet 204 apart from all other hardware, software, and/or firmware (e.g., on the SiP 200 and/or external to the SiP 200). As such, data stored in the reserved region of memory is secured and confidentiality of the data is preserved. Additionally or alternatively, data stored in the memory 202 is encrypted.

In the illustrated example of FIG. 2, the one or more core chiplets 206 include a first example core chiplet 206₁ through an Nth example core chiplet 206_{N}. In the example of FIG. 2, each of the one or more core chiplets 206 includes one or more core processor circuits and a cache coherent fabric circuit. Additionally, each of the one or more core chiplets 206 includes one or more memory control registers. In the example of FIG. 2, at least one of the one or more core chiplets 206 includes an example basic input/output system (BIOS) circuit 214 and each of the one or more core chiplets 206 includes example trusted firmware 216.

In the illustrated example of FIG. 2, the BIOS circuit 214 programs the one or more memory and I/O controllers 208 to reserve an example chiplet reserved memory (CRM) region 218 in the memory 202. In the example of FIG. 2, the trusted firmware 216 performs memory and interconnect checking to ensure that security policies of the SiP 200 are enforced. For example, the trusted firmware 216 verifies that the CRM region 218 does not overlap with confidential computing regions of the memory 202, fixed configurations of the SiP 200, among other data. In some examples, the trusted firmware 216 also verifies that the CRM region 218 is within the SiP 200.

In the illustrated example of FIG. 2, the BIOS circuit 214 is implemented by a processor circuit programmed by machine-readable instructions. For example, the BIOS circuit 214 can be flashed with BIOS instructions prior to deployment of the SiP 200. While the BIOS circuit 214 is illustrated as implemented in at least one of the one or more core chiplets 206, the BIOS circuit 214 can be implemented in any other component of the SiP 200, as a standalone chiplet of the SiP 200, and/or in any other manner.

In the illustrated example of FIG. 2, the trusted firmware 216 is implemented by firmware executing on a core processor circuit (e.g., a core processor circuit programmed by machine-readable instructions). In the example of FIG. 2, the trusted firmware 216 may be implemented as microcode of a core processor circuit, XuCode in an SGX environment, and/or any other trusted firmware of the SiP 200 (e.g., manufacturer trusted firmware, designer trusted firmware, etc.). While the example of FIG. 2 illustrates the trusted firmware 216 as implemented in the one or more core chiplets 206, the trusted firmware 216 can be implemented in any other component of the SiP 200 (e.g., the one or more memory and I/O controllers 208).

In the illustrated example of FIG. 2, the chiplet 204 is coupled to the one or more memory and I/O controllers 208 via one or more standard interface protocols (e.g., the CXL.$/UCIe protocol, the CXL.IO/PCIe protocol, etc.). In the example of FIG. 2, the chiplet 204 includes one or more example accelerator circuits 220. For example, the one or more accelerator circuits 220 include a first example accelerator circuit 220₁ (e.g., an AI deep learning accelerator circuit, a ViT accelerator circuit, a generative AI accelerator circuit, etc.) through a Pth example accelerator circuit 220_{P} (e.g., a network accelerator circuit).

In the illustrated example of FIG. 2, the chiplet 204 also includes an example host interface (HI) circuit 222, one or more example chiplet reserved memory (CRM) range registers (RRs) 224, and an example disallowed CRM logic circuit 226. In the example of FIG. 2, the HI circuit 222 includes logic to interface between the one or more accelerator circuits 220 and the one or more memory and I/O controllers 208. In some examples, one instance of the HI circuit 222 supports multiple accelerator circuits.

In the illustrated example of FIG. 2, the one or more CRM RRs 224 indicate the allowed range of the CRM region 218 that has been reserved for the chiplet 204. In the example of FIG. 2, the value(s) of the one or more CRM RRs 224 will be maintained even in the event of a reset of the SiP 200 and/or the chiplet 204 such as a physical function reset (PFLR), a warm reset (e.g., a reset that does not turn off the power of the SiP 200 and/or the chiplet 204), among others. In examples disclosed herein the chiplet 204 ensures that the one or more CRM RRs 224 are not power-gated or reset on any event. In some examples, the one or more CRM RRs 224 are reset when the SiP 200 and/or the chiplet 204 is cold reset (e.g., a reset that turns off power of the SiP 200 and/or the chiplet 204 and then turns the power back on).

As described further herein, the HI circuit 222 or a secure chiplet controller (e.g., a chiplet device security management circuit described in further detail below) can subdivide the allowed range of the CRM region 218 among the one or more accelerator circuits 220. For example, the HI circuit 222 or the secure chiplet controller can program one or more disallowed registers in the disallowed CRM logic circuit 226 to subdivide the allowed range defined in the one or more CRM RRs 224 into a first sub-region for a first accelerator circuit and a second sub-region for a second accelerator circuit. In the example of FIG. 2, the disallowed CRM logic circuit 226, sometimes referred to as a control circuit, includes logic and one or more registers to ensure that respective ones of the one or more accelerator circuits can access a sub-region of the CRM region 218 that has been assigned to that accelerator circuit and none of the other sub-regions of the CRM region 218.

In the illustrated example of FIG. 2, after the CRM region 218 is provisioned for the chiplet 204, the chiplet 204 can access data from the CRM region 218 of the memory 202. To cache data accessed from the CRM region 218, the chiplet 204 can include a global cache accessible by the one or more accelerator circuits 220. In some examples, data accessed from the CRM region 218 is cached on the one or more memory and I/O controllers 208. Additionally or alternatively, each of the one or more accelerator circuits 220 includes a local cache to cache data accessed from the CRM region 218. In examples disclosed herein, if the CRM regions 218 is subdivided between the one or more accelerator circuits 220 and the one or more accelerator circuits 220 do not include a local cache, the cache is similarly subdivided to protect privacy of data in the cache.

In the illustrated example of FIG. 2, the one or more memory and I/O controllers 208 are implemented by one or more control circuits to control access to the memory 202. For example, the one or more memory and I/O controllers 208 are implemented by one or more control circuits on a semiconductor die or a chiplet. In the example of FIG. 2, the one or more memory and I/O controllers 208 include a first example memory and I/O controller 208₁ through an Mth example memory and I/O controller 208_{M}. Each of the one or more memory and I/O controllers 208 includes one or more memory control circuits, a caching hierarchy, one or more coherent I/O fabric circuits, one or more memory decoder circuits, and one or more accelerator circuits. For example, each of the one or more memory and I/O controllers 208 includes one or more example memory control circuits 228, an example cache stack logic circuit 230, a first example input/output (I/O) stack logic circuit 232, a second example input/output (I/O) stack logic circuit 234, a third example input/output (I/O) stack logic circuit 236, one or more example memory fabric decoder circuits 238, and an example memory fabric chiplet reserved memory (CRM) agent circuit 240. In the example of FIG. 2, each of the one or more core chiplets 206 includes an example access block logic circuit 242 as described further herein.

In the illustrated example of FIG. 2, the one or more memory control circuits 228 (also referred to herein as at least one memory control circuit) include logic to read and/or write to the memory 202 as well as logic to perform memory refresh and other functions. For example, the one or more memory control circuits 228 encrypt and/or decrypt data associated with an access to the memory 202. In the example of FIG. 2, the cache stack logic circuit 230 includes one or more CXL.$ control logic circuits, one or more bridge circuits (e.g., to convert between protocols), and one or more physical layer (PHY) interconnects (e.g., UCIe PHY interconnects) to enable the chiplet 204 to communicate with the one or more memory and I/O controllers 208.

In the illustrated example of FIG. 2, each of the first I/O stack logic circuit 232, the second I/O stack logic circuit 234, and the third I/O stack logic circuit 236 includes logic and one or more registers for performing I/O and memory connections for devices. For example, the first I/O stack logic circuit 232 includes logic and one or more registers for performing I/O and memory connections for CXL Type 1, 2, and/or 3 devices. Additionally, the second I/O stack logic circuit 234 includes logic and one or more registers for performing I/O and memory connections for discrete CXL.IO/PCIe devices such as the one or more discrete AI devices 210 and/or the one or more discrete AI accelerator circuits 212. In the example of FIG. 2, the third I/O stack logic circuit 236 includes logic and one or more registers for performing I/O and memory connections for RCiEP devices.

In the illustrated example of FIG. 2, the one or more memory fabric decoder circuits 238 include logic to decode an address from another device (e.g., the chiplet 204, the one or more core chiplets 206, the one or more discrete AI devices 210, the one or more discrete AI accelerator circuits 212, etc.) into one or more select line values to access one or more memory cells of the memory 202. In the example of FIG. 2, the memory fabric CRM agent circuit 240 is a coherent memory agent such as a caching agent, a host agent, etc. for access control of external CXL devices and/or RCiEP devices connected to the SiP 200 via a CXL.$ bus.

In the illustrated example of FIG. 2, the BIOS circuit 214 allocates the CRM region 218 to the chiplet 204 as described above. In some examples, if the SiP 200 includes multiple instances of the chiplet 204, the BIOS circuit 214 allocates each instance of the chiplet 204 a CRM region in the memory 202 (e.g., a first CRM region for a first instance of the chiplet 204, a second CRM region for a second instance of the chiplet 204, etc.). In the example of FIG. 2, the CRM region 218 can have a fixed size or a variable size.

For example, the CRM region 218 can be a contiguous, aligned 4 kilobyte (KB) region of the memory 202. In the example of FIG. 2, the CRM region 218 represents a region of the memory 202 that is reserved for exclusive use by (e.g., reserved for access by) the chiplet 204 and further by at least one of the one or more accelerator circuits 220 that is authorized to use the CRM region 218. For example, the CRM region 218 represents a region of the memory 202 that is reserved for exclusive use by the chiplet 204 apart from any other die, chiplet, tile, etc. of the SiP 200 and/or another circuit. Additionally, in the example of FIG. 2, the CRM region 218 represents the full range of the memory 202 that any instance of the chiplet 204 is permitted to use.

In some examples, the CRM region 218 is a contiguous region of the memory 202 that is reserved for exclusive access by chiplets of the SiP 200 (e.g., the chiplet 204 and any other chiplet on the SiP 200). In such examples, the BIOS circuit 214 subdivides the CRM region 218 into different sub-regions for each chiplet where each sub-region can be further subdivided among the accelerator circuits on a chiplet as described further herein. For example, the BIOS circuit 214 subdivides the CRM region 218 into a first sub-region for exclusive access by a first chiplet of the SiP 200 and a second sub-region for exclusive access by a second chiplet of the SiP 200. As described further herein, each chiplet can subdivide a sub-region into portions for exclusive use by accelerator circuits of that chiplet. For example, the first chiplet can subdivide the first sub-region into a first portion for exclusive access by a first accelerator circuit of the first chiplet and a second portion for exclusive access by a second accelerator circuit of the first chiplet.

Additionally or alternatively, the CRM region 218 is a contiguous region of the memory 202 that is reserved for exclusive access by the chiplet 204 and the memory 202 also includes at least a second CRM region for at least a second chiplet on the SiP 200. In such examples, the BIOS circuit 214 reserves the CRM region 218 for exclusive access by the chiplet 204 and reserves a second CRM region for exclusive access by a second chiplet of the SiP 200. As described above, each chiplet can subdivide a CRM region among the accelerator circuits on the chiplet. For example, the chiplet 204 can subdivide the CRM region 218 into a first sub-region for exclusive access by a first accelerator circuit of the chiplet 204 and a second sub-region for exclusive access by a second accelerator circuit of the chiplet 204. In examples disclosed herein, subregion and sub-region are used interchangeably.

As described above, the chiplet 204 includes the ability to subdivide the CRM region 218 among the one or more accelerator circuits 220. For example, the HI circuit 222 and/or the secure chiplet controller allocates sub-ranges of the CRM region 218 to respective ones of the one or more accelerator circuit 220. That is, the HI circuit 222 and/or the secure chiplet controller distributes the CRM region 218 among the various accelerator circuits of the chiplet 204 by programming one or more disallowed registers of the disallowed CRM logic circuit 226. As such, the HI circuit 222 and/or the secure chiplet controller enable access control checks such that unauthorized accelerator circuits of the chiplet 204 cannot access a sub-region of the CRM region 218 that is reserved for a different accelerator circuit on the chiplet 204.

In the illustrated example of FIG. 2, the trusted firmware 216 verifies that CRM region 218 does not overlap with one or more memory ranges allocated for confidential computing technology resources (e.g., TDs, SGX enclaves etc.), fixed memory-mapped input/output (MMIO) register ranges, and/or other reserved regions of the memory 202. In the example of FIG. 2, the chiplet 204 exposes the one or more CRM RRs 224 to the host (e.g., the one or more core chiplets 206). For example, the one or more CRM RRs 224 include one or more fixed address MMIO registers. To provision the one or more CRM RRs 224 on the chiplet 204, the BIOS circuit 214 can program the one or more CRM RRs 224 with the memory range of the CRM region 218. In the example of FIG. 2, the trusted firmware 216 securely verifies the one or more CRM RRs 224 on the chiplet 204 using trusted UCIe sideband access between the chiplet 204 and the one or more core chiplets 206. After the one or more CRM RRs 224 are provisioned, any host SW that attempts to access the CRM region 218 will be blocked. Additionally, any access from untrusted firmware on the chiplet 204 will be blocked.

As described above, examples disclosed herein include chiplet reserved memory and an interconnect architecture for edge XPUs. As such, the chiplet 204, which hosts the one or more accelerator circuits 220 (e.g., an AI and/or transformer accelerator circuit) can utilize a dedicated CRM region (e.g., the CRM region 218) carved out from the memory 202. For example, the memory 202 acts as a common "pool" of memory that is accessible by not only the one or more core chiplets 206 but also includes dedicated portions carved out for dedicated use by the one or more accelerator circuits 220 (e.g., an AI accelerator circuit, a ViT accelerator circuit, a networking accelerator circuit, etc.).

Example disclosed herein include memory and interconnect fabric components to build a multi-chiplet disaggregated edge system architecture that consolidates accelerator circuits on dedicated chiplets in a SiP. Examples disclosed herein also include roles of silicon, firmware (e.g., both trusted and untrusted), and security policies for such a SiP. Additionally, examples disclosed herein include use and enforcement policies governing how one or more chiplets can use system memory regions dedicated for each of the one or more chiplets. As described above, an example CRM region is only accessible by the chiplet for which it has been reserved and is protected from access by all other hardware, software, and/or firmware on a SiP. For example, an OS hosted by one or more processor circuits of the one or more core chiplets 206 cannot access a CRM region reserved for the chiplet 204. In other words, the CRM region reserved for use (e.g., exclusive use) by the chiplet 204 is inaccessible to and/or cannot be addressed by an OS hosted by one or more processor circuits of the one or more core chiplets 206. Additionally, example CRM regions are protected from undesired, untrusted hardware, software, and/or firmware on the same chiplet.

In examples disclosed herein, provisioning of a CRM region and access control flow configuration is similar in examples where a SiP is a confidential computing (e.g., TDX, SGX, AMD SEV, Advanced Reduced Instruction Set Computer (RISC) Machine (ARM) Security IP, ARM TrustZone, ARM Platform Security Architecture (PSA), etc.) enabled system as well as in example where a SiP is not a confidential computing enabled system. For example, in an example where a SiP is not a confidential computing enabled system, BIOS is trusted to provision and configure access controls for a CRM region. In such examples, the host OS remains outside the trust boundary. Additionally, in such examples, the CRM region is not verified after the BIOS provisions the CRM region. In an example where a SiP is a confidential computing enabled system, trusted firmware performs verification of the CRM region that has been provisioned. Examples disclosed herein operate similarly regardless of the confidential computing technology that a system includes (e.g., an Intel-based system, an AMD-based system, etc.).

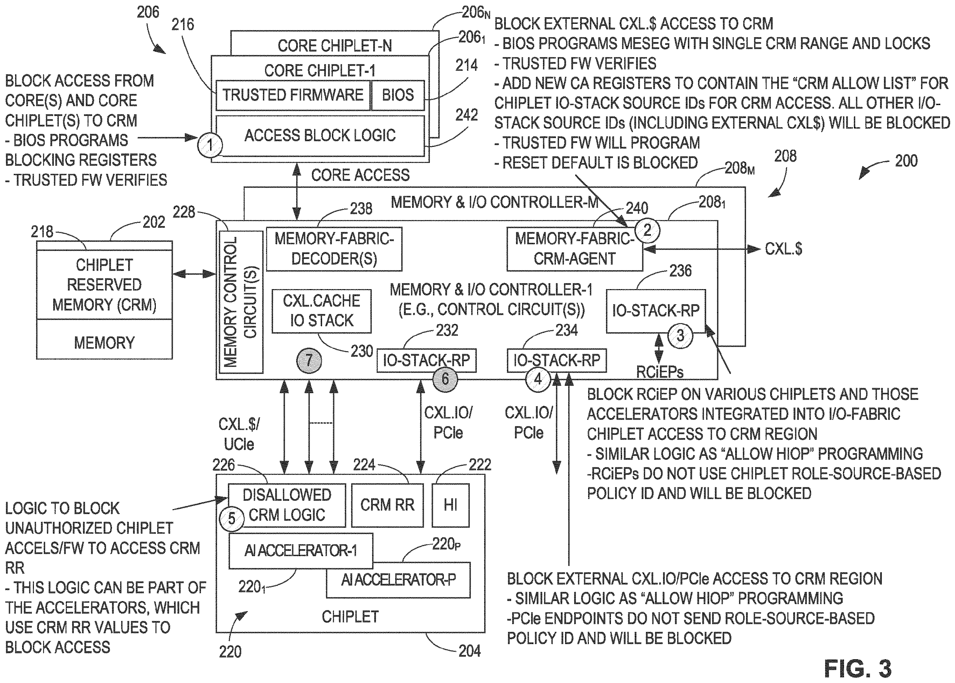

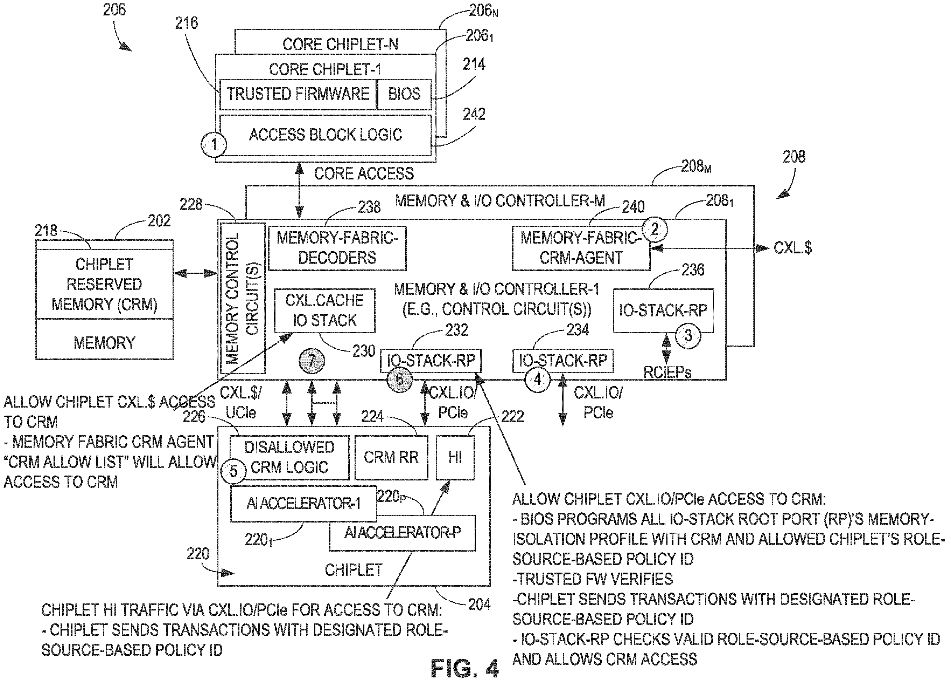

FIG. 3 is a block diagram illustrating example communication between the one or more core chiplets 206, the one or more memory and I/O controllers 208, and the chiplet 204 of FIG. 2 to block access to the CRM region 218 of the memory 202 of FIG. 2. FIG. 4 is a block diagram illustrating example communication between the one or more core chiplets 206, the one or more memory and I/O controllers 208, and the chiplet 204 of FIG. 2 to allow access to the CRM region 218 of the memory 202 of FIG. 2. As described below, FIGS. 3 and 4 illustrate example allocation, verification, and access protection flows for the CRM region 218.

In the illustrated example of FIG. 3, the BIOS circuit 214 programs one or more exclusion range registers of the one or more core chiplets 206 with the range of the CRM region 218 to control access of the CRM region 218 by the one or more core chiplets 206. Additionally, the trusted firmware 216 verifies that the one or more exclusion range registers have been programmed. In the example of FIG. 3, respective instances of the access block logic circuit 242 on the one or more core chiplets 206 will check core-originating transactions to determine if a core-originating transaction is addressed to memory within a range defined by the one or more exclusion range registers (e.g., the CRM region 218). If respective instances of the access block logic circuit 242 detect a core-originating transaction within the range of the CRM region 218, the respective instances of the access block logic circuit 242 will abort the transaction (e.g., via silent drop).

In the illustrated example of FIG. 3, if there are one or more CXL Type 1, 2, and/or 3 devices attached the SiP 200, then the memory fabric CRM agent circuit 240 ensures that none of the CXL Type 1, 2, and/or 3 devices can access the CRM region 218. For example, the BIOS circuit 214 programs a memory-exclusion region (MESEG) in the memory fabric CRM agent circuit 240 of the one or more memory and I/O controllers 208 with the range of the CRM region 218 to control access of the CRM region 218 by one or more external CXL.$ device. Additionally, the trusted firmware 216 verifies that the MESEG of the memory fabric CRM agent circuit 240 has been programmed by the BIOS circuit 214 and also verifies any security policy adjustments for the SiP 200. Additionally, the trusted firmware 216 locks the MESEG of the memory fabric CRM agent circuit 240.

In the illustrated example of FIG. 3, the trusted firmware 216 also programs one or more registers of the memory fabric CRM agent circuit 240 with a "CRM allow list" that defines the fabric IO-stack source IDs (e.g., unified fabric interface (UFI)) for the chiplet 204. As used herein, ID is used to refer to identifier and identity interchangeably. In the example of FIG. 3, the memory fabric CRM agent circuit 240 will filter out (e.g., block) an access request to the CRM region 218 if the access request does not include (e.g., is lacking) a fabric IO-stack source ID that matches at least one fabric IO-stack source ID in the "CRM allow list". The above-described filtering includes blocking external CXL.$ devices. Additionally, at least one of the BIOS circuit 214 or the trusted firmware 216 programs the memory fabric CRM agent circuit 240 to block the default configuration of the memory fabric CRM agent circuit 240 to clear the "CRM allow list" after reset.

In the illustrated example of FIG. 3, the BIOS circuit 214 programs a memory protection region (e.g., IMR) of the third I/O stack logic circuit 236 with the range of the CRM region 218 to control access of the CRM region 218 by one or more RCiEP integrated accelerator circuits. Additionally, the BIOS circuit 214 programs the third I/O stack logic circuit 236 with a role and identity-based security identifier of a chiplet (e.g., the chiplet 204) that is allowed to access the CRM region 218. RCiEPs (e.g., integrated accelerator circuits) other than the chiplet permitted to access the CRM region 218 will not issue transactions including the role and identity-based security identifier of the permitted chiplet. As such, the third I/O stack logic circuit 236 will not map requests from other chiplets to an allowed IMR and will block such requests if addressed to the CRM region 218.

In the illustrated example of FIG. 3, the BIOS circuit 214 programs a memory protection region (e.g., IMR) of the second I/O stack logic circuit 234 with the range of the CRM region 218 to control access of the CRM region 218 by one or more PCIe/CXL.IO discrete endpoint devices. For example, the BIOS circuit 214 programs the second I/O stack logic circuit 234 similarly to how the BIOS circuit 214 program the third I/O stack logic circuit 236. PCIe/CXL.IO endpoint devices do not issue transactions including role and identity-based security identifiers. As such, transactions from PCIe/CXL.IO endpoint devices will be dropped by the second I/O stack logic circuit 234 since the transactions do not include a role and identity-based security identifier of a chiplet (e.g., the chiplet 204) that is allowed to access the CRM region 218.

In the illustrated example of FIG. 3, the HI circuit 222 and/or a secure chiplet controller (e.g., described further herein) programs one or more registers of the disallowed CRM logic circuit 226 to control access of one or more sub-regions of the CRM region 218 by accelerator circuits on the same chiplet. For example, the disallowed CRM logic circuit 226 utilizes the one or more registers to check transactions originating from each of the one or more accelerator circuits 220. As such, the disallowed CRM logic circuit 226 ensures that any accelerator circuit is allowed to access an assigned sub-region of the CRM region 218 but not allowed to access other sub-regions of the CRM region 218. In some examples, the disallowed CRM logic circuit 226 is implemented as a global entity that operates as a centralized filter for all of the one or more accelerator circuits 220 of the chiplet 204. Additionally or alternatively, each of the one or more accelerator circuits 220 includes an instance of the disallowed CRM logic circuit 226 to verify whether a transaction is addressed to a permitted sub-region of the CRM region 218.

As described above, FIG. 4 illustrates example communication between the one or more core chiplets 206, the one or more memory and I/O controllers 208, and the chiplet 204 of FIG. 2 to allow access to the CRM region 218 of the memory 202 of FIG. 2. For example, the BIOS circuit 214 programs a memory protection region (e.g., IMR) of the first I/O stack logic circuit 232 with the range of the CRM region 218 to control access of the CRM region 218 by one or more integrated chiplets. In the example of FIG. 4, the BIOS circuit 214 programs the first I/O stack logic circuit 232 similarly to how the BIOS circuit 214 program the third I/O stack logic circuit 236. For example, the BIOS circuit 214 programs the first I/O stack logic circuit 232 with a role and identity-based security identifier of a chiplet (e.g., the chiplet 204) that is allowed to access the CRM region 218.

In the illustrated example of FIG. 4, the chiplet 204 issues transaction over a CXL.IO/PCIe interface (e.g., according to a CXL.IO/PCIe protocol) including a role and identity-based identifier of the chiplet 204. If (1) the role and identity-based identifier included in a transaction from the chiplet 204 matches the role and identity-based identifier programmed by the BIOS circuit 214 and (2) the address included in the transaction falls within the CRM region 218 defined by the one or more CRM RRs programmed into the memory range (e.g., IMR) of the first I/O stack logic circuit 232, then the first I/O stack logic circuit 232 will permit a transaction to access the CRM region 218. Otherwise, the first I/O stack logic circuit 232 will block (e.g., drop) the transaction.

In the illustrated example of FIG. 4, the cache stack logic circuit 230 allows access to the CRM region 218 for all transactions from the chiplet 204 that are sent over a CXL.Cache/UCIe interface (e.g., according to a CXL.Cache/UCIe protocol). For example, as described above, the memory fabric CRM agent circuit 240 is programmed with one or more fabric IO-stack source IDs of one or more CXL.Cache paths of the chiplet 204. In the example of FIG. 4, the chiplet 204 includes three source addresses for three CXL.Cache paths to the one or more memory and I/O controllers 208. As such, the "CRM allow list" of the memory fabric CRM agent circuit 240 is programmed with the three fabric IO-stack source IDs.

Accordingly, the memory fabric CRM agent circuit 240 will perform access verification for the CRM region 218 based on the provisioned range of the CRM region 218 and the programmed fabric IO-stack source IDs. If the memory fabric CRM agent circuit 240 verifies the access request, the transaction is deemed legitimate and will be permitted (e.g., by the cache stack logic circuit 230 and/or the memory fabric CRM agent circuit 240) to access the CRM region 218. In some examples (e.g., if the memory 202 is a virtual memory and/or remote with respect to the SiP 200), the chiplet 204 accesses the memory 202 utilizing the CXL.Mem interface. In such examples, access control for the CXL.Mem interface is performed by the cache stack logic circuit 230 and/or the memory fabric CRM agent circuit 240 as described above.

In some examples, an accelerator circuit and/or other device that is not authorized to access the CRM region 218 may attempt to access the CRM region 218. For example, manipulation of the SiP 200 by untrusted hardware (HW), firmware (FW), and/or software (SW) could result in an accelerator circuit and/or other device attempting to access the CRM region 218. In such examples, CRM access checks performed by the chiplet 204, the one or more core chiplets 206, and/or the one or more memory and I/O controllers 208 as described above will prevent (e.g., block) unauthorized access to the CRM region 218.

As described above, the chiplet 204 can access the CRM region 218 concurrently utilizing the CXL.IO/PCIe interface (e.g., according to the CXL.IO/PCIe protocol) and the CXL.Cache/UCIe interface (e.g., according to the CXL.Cache/UCIe protocol). As such, the chiplet 204 can transmit data (e.g., data to be processed via a workload, data indicative of the result of a workload, etc.) over the multiple CXL.Cache/UCIe ports of the chiplet 204 and send configuration information (e.g., a role and identity-based ID, a fabric IO-stack source ID, etc.) over the CXL.IO/PCIe port of the chiplet 204. For example, because the chiplet 204 is integrated in the SiP 200 as an RCiEP, the chiplet 204 can communicate via die-to-die protocols such as CXL.Cache and UCIe in addition to peripheral device protocols such as CXL.IO and PCIe. Thus, by communicating concurrently of CXL.Cache/UCIe and CXL.IO/PCIe interfaces, the chiplet 204 increases the data transfer bandwidth between the chiplet 204 and the one or more memory and I/O controllers 208.

As described above, the disallowed CRM logic circuit 226 (e.g., at least one control circuit) performs a first level of access control for the CRM region 218 (e.g., with respect to at least two circuits of the chiplet 204) and the one or more memory and I/O controllers 208 perform a second level of access control for the CRM region 218 (e.g., with respect to one or more dies of the SiP 200 and/or another circuit). For example, the disallowed CRM logic circuit 226 controls access of the one or more accelerator circuits 220 to one or more sub-regions of the CRM region 218. Thus, if a first accelerator circuit requests access to a sub-region of the CRM region 218 that is reserved for a second accelerator circuit, the disallowed CRM logic circuit 226 does not send a signal to access the sub-region outside of the chiplet 204. For example, the disallowed CRM logic circuit 226 does not send the signal to access the sub-region outside of the chiplet 204 in response to determining that one or more disallowed registers for the first accelerator circuit indicate that the first accelerator circuit is not permitted to access the sub-region.

Additionally, as described above, the one or more memory and I/O controllers 208 controls access of the chiplet 204 and any other circuit to the CRM region 218. Thus, if a first circuit different than the chiplet 204 requests access to the CRM region 218, the one or more memory and I/O controllers 208 does not send a signal to access the CRM region 218 outside of the SiP 200. For example, the one or more memory and I/O controllers 208 does not send the signal to access the CRM region 218 outside of the SiP 200 in response to determining that the first circuit is not associated with an identifier that is permitted to access the CRM region 218.

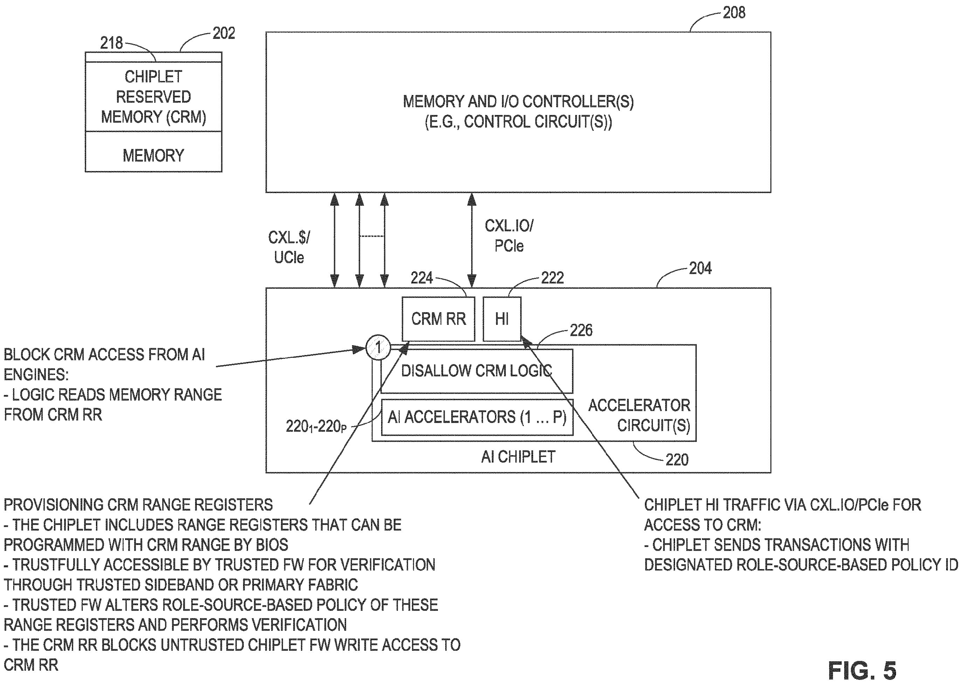

FIG. 5 is a block diagram illustrating example operation of the chiplet 204 of FIG. 2 to control access to the CRM region 218 of the memory 202 of FIG. 2 when the chiplet 204 includes one type of accelerator circuit. In the example of FIG. 5, the one or more accelerator circuits 220 include AI accelerator circuits (e.g., AI and ViT accelerator circuits). In the example of FIG. 5, provisioning and access control of the CRM region 218 for the chiplet 204 (e.g., an AI chiplet) occurs similarly as described in FIGS. 2-4. For the chiplet 204 (e.g., an AI chiplet), the HI circuit 222 and/or a secure chiplet controller programs the one or more registers of the disallowed CRM logic circuit 226 based on the subdivision of the CRM region 218. As such, the disallowed CRM logic circuit 226 will block AI accelerator circuits and/or firmware that is not authorized to access the CRM region 218 and/or a sub-region of the CRM region 218.

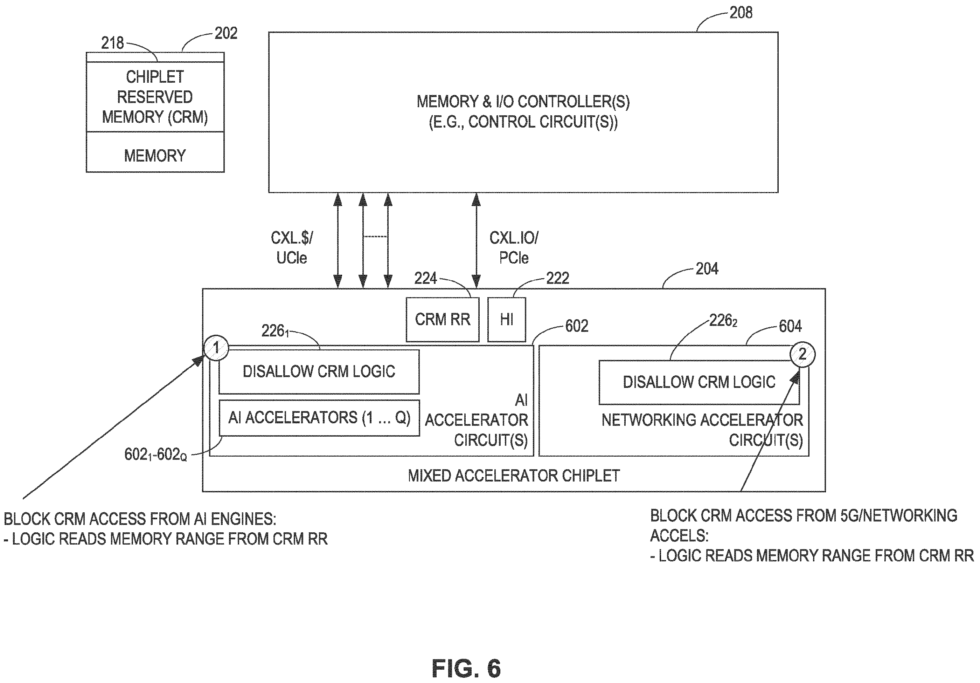

FIG. 6 is a block diagram illustrating example operation of the chiplet 204 of FIG. 2 to control access to the CRM region 218 of the memory 202 of FIG. 2 when the chiplet 204 includes more than one type of accelerator circuit. In the example of FIG. 6, the chiplet 204 includes one or more example AI accelerator circuits 602 and one or more example networking accelerator circuits 604. For example, the one or more AI accelerator circuits 602 include a first example AI accelerator circuit 602₁ to a *Q*th example AI accelerator circuit 602_{Q}. Additionally, the one or more AI accelerator circuits 602 and the one or more networking accelerator circuits 604 are each associated with an instance of the disallowed CRM logic circuit 226. For example, the one or more AI accelerator circuits 602 are associated with a first example disallowed CRM logic circuit 226₁ and the one or more networking accelerator circuits 604 are associated with a second example disallowed CRM logic circuit 226₂.

In the illustrated example of FIG. 6, provisioning and access control of the CRM region 218 for the chiplet 204 (e.g., a mixed accelerator chiplet) occurs similarly as described in FIGS. 2-4. For the chiplet 204 (e.g., a mixed accelerator chiplet), the HI circuit 222 and/or a secure chiplet controller programs the one or more registers of the first disallowed CRM logic circuit 226₁ based on the subdivision of the CRM region 218. As such, the first disallowed CRM logic circuit 226₁ will block the one or more AI accelerator circuits 602 from accessing a sub-region of the CRM region 218 assigned to the one or more networking accelerator circuits 604.

Additionally, for the chiplet 204 (e.g., a mixed accelerator chiplet), the HI circuit 222 and/or a secure chiplet controller programs the one or more registers of the second disallowed CRM logic circuit 226₂ based on the subdivision of the CRM region 218. As such, the second disallowed CRM logic circuit 226₂ will block the one or more networking accelerator circuits 604 from accessing a sub-region of the CRM region 218 assigned to the one or more AI accelerator circuits 602. As such, the first disallowed CRM logic circuit 226₁ and the second disallowed CRM logic circuit 226₂ block accelerator circuits (e.g., AI and/or networking accelerator circuits) and/or firmware that is not authorized to access the CRM region 218 and/or a sub-region of the CRM region 218.

The one or more core chiplets 206, the one or more memory and I/O controllers 208, and the chiplet 204 of FIGS. 2-6 may be instantiated (e.g., creating an instance of, bring into being for any length of time, materialize, implement, etc.) by programmable circuitry such as a Central Processor Unit (CPU) executing first instructions. Additionally or alternatively, the one or more core chiplets 206, the one or more memory and I/O controllers 208, and the chiplet 204 of FIGS. 2-6 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIGS. 2-6 may, thus, be instantiated at the same or different times. Some or all of the circuitry of FIGS. 2-6 may be instantiated, for example, in one or more threads executing concurrently on hardware and/or in series on hardware. Moreover, in some examples, some or all of the circuitry of FIGS. 2-6 may be implemented by microprocessor circuitry executing instructions and/or FPGA circuitry performing operations to implement one or more virtual machines and/or containers.

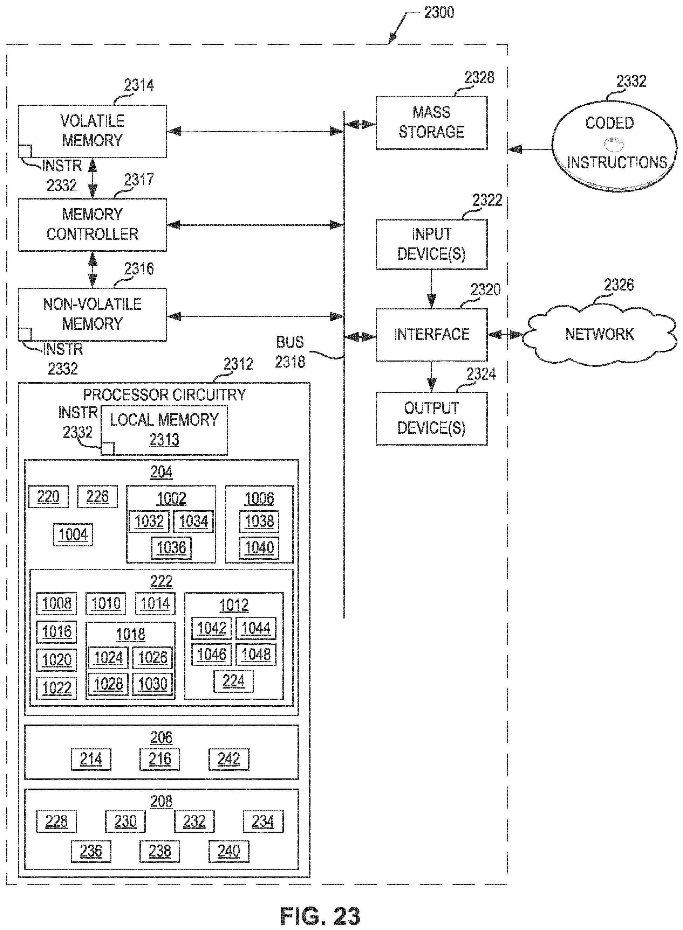

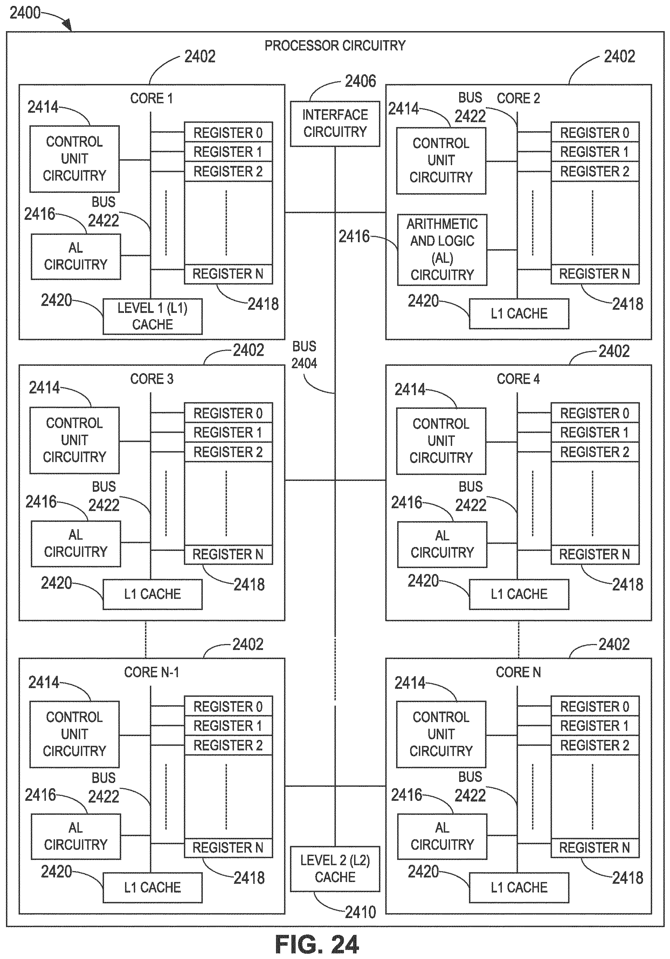

In some examples, the BIOS circuit 214 is instantiated by programmable circuitry executing BIOS instructions and/or configured to perform operations such as those represented by the flowchart(s) of FIG. 7. In some examples, the one or more core chiplets 206 includes means for configuring a SiP. For example, the means for configuring may be implemented by the BIOS circuit 214. In some examples, the BIOS circuit 214 may be instantiated by programmable circuitry such as the example programmable circuitry 2312 of FIG. 23. For instance, the BIOS circuit 214 may be instantiated by the example microprocessor 2400 of FIG. 24 executing machine-executable instructions such as those implemented by at least blocks 702 and 706 of FIG. 7.

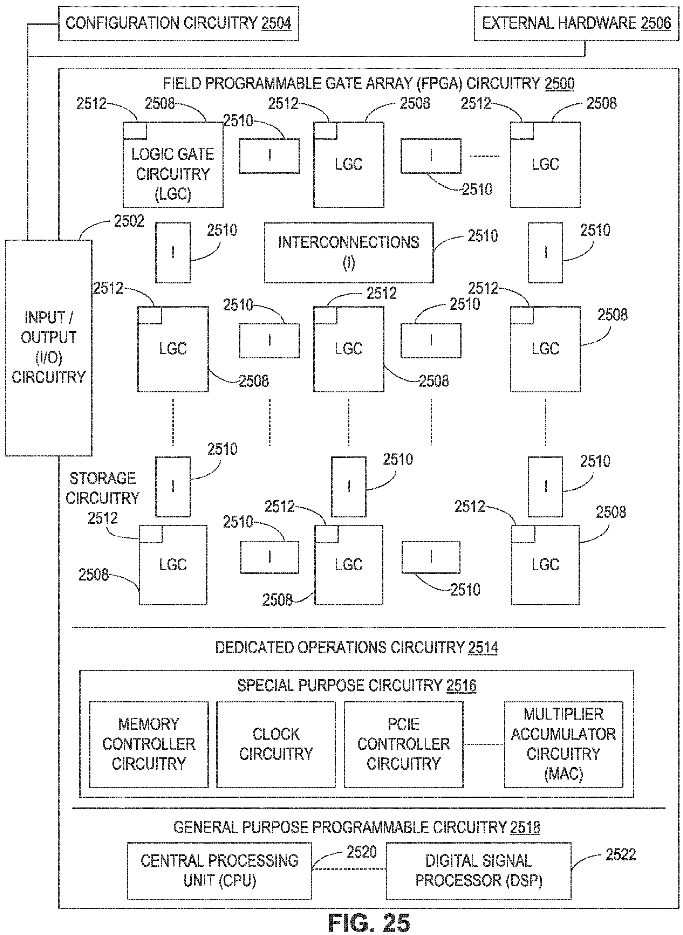

In some examples, the BIOS circuit 214 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the BIOS circuit 214 may be instantiated by any other combination of hardware, software, and/or firmware. For example, the BIOS circuit 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the trusted firmware 216 is instantiated by programmable circuitry executing trusted firmware instructions and/or configured to perform operations such as those represented by the flowchart(s) of FIG. 7. In some examples, the one or more core chiplets 206 includes means for verifying a configuration. For example, the means for verifying may be implemented by the trusted firmware 216. In some examples, the trusted firmware 216 may be instantiated by programmable circuitry such as the example programmable circuitry 2312 of FIG. 23. For instance, the trusted firmware 216 may be instantiated by the example microprocessor 2400 of FIG. 24 executing machine-executable instructions such as those implemented by at least blocks 704 and 708 of FIG. 7.

In some examples, the trusted firmware 216 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the trusted firmware 216 may be instantiated by any other combination of hardware, software, and/or firmware. For example, the trusted firmware 216 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the access block logic circuit 242 is instantiated by programmable circuitry executing access control instructions and/or configured to perform operations such as those represented by the flowchart(s) of FIG. 7. In some examples, the one or more core chiplets 206 includes means for blocking processor access to reserved memory. For example, the means for blocking may be implemented by the access block logic circuit 242. In some examples, the access block logic circuit 242 may be instantiated by programmable circuitry such as the example programmable circuitry 2312 of FIG. 23. For instance, the access block logic circuit 242 may be instantiated by the example microprocessor 2400 of FIG. 24 executing machine-executable instructions such as those implemented by at least blocks 710 and 712 of FIG. 7.

In some examples, the access block logic circuit 242 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the access block logic circuit 242 may be instantiated by any other combination of hardware, software, and/or firmware. For example, the access block logic circuit 242 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

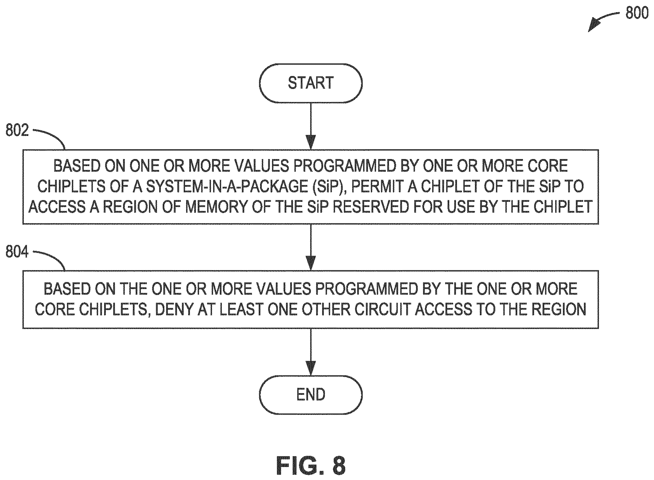

In some examples, the one or more memory and I/O controllers 208 are instantiated by programmable circuitry executing memory and I/O control instructions and/or configured to perform operations such as those represented by the flowchart(s) of FIG. 8. In some examples, the one or more memory and I/O controllers 208 includes means for controlling access to reserved memory. For example, the means for controlling may be implemented by the one or more memory and I/O controllers 208. In some examples, the one or more memory and I/O controllers 208 may be instantiated by programmable circuitry such as the example programmable circuitry 2312 of FIG. 23. For instance, the one or more memory and I/O controllers 208 may be instantiated by the example microprocessor 2400 of FIG. 24 executing machine-executable instructions such as those implemented by at least blocks 802 and 804 of FIG. 8.

In some examples, the one or more memory and I/O controllers 208 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the one or more memory and I/O controllers 208 may be instantiated by any other combination of hardware, software, and/or firmware. For example, the one or more memory and I/O controllers 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

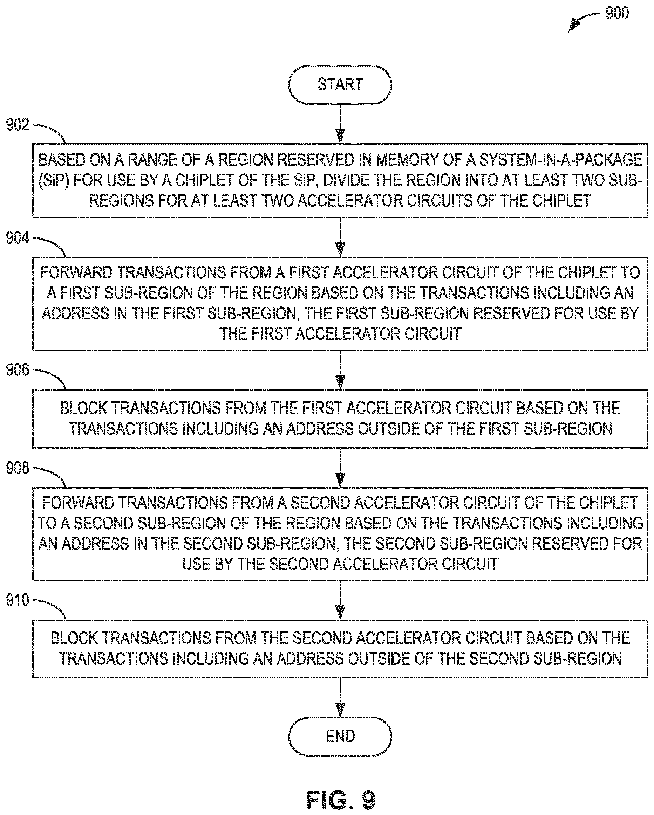

In some examples, the HI circuit 222 (e.g., a host interface circuit) is instantiated by programmable circuitry executing host interfacing instructions and/or configured to perform operations such as those represented by the flowchart(s) of FIG. 9. In some examples, the chiplet 204 includes means for interfacing with a host device. For example, the means for interfacing may be implemented by the HI circuit 222. In some examples, the HI circuit 222 may be instantiated by programmable circuitry such as the example programmable circuitry 2312 of FIG. 23. For instance, the HI circuit 222 may be instantiated by the example microprocessor 2400 of FIG. 24 executing machine-executable instructions such as those implemented by at least block 902 of FIG. 9.

In some examples, the HI circuit 222 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the HI circuit 222 may be instantiated by any other combination of hardware, software, and/or firmware. For example, the HI circuit 222 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the disallowed CRM logic circuit 226 is instantiated by programmable circuitry executing disallowing instructions and/or configured to perform operations such as those represented by the flowchart(s) of FIG. 9. In some examples, the chiplet 204 includes means for controlling access of one or more accelerator circuits to reserved memory. For example, the means for controlling may be implemented by the disallowed CRM logic circuit 226. In some examples, the disallowed CRM logic circuit 226 may be instantiated by programmable circuitry such as the example programmable circuitry 2312 of FIG. 23. For instance, the disallowed CRM logic circuit 226 may be instantiated by the example microprocessor 2400 of FIG. 24 executing machine-executable instructions such as those implemented by at least blocks 904, 906, 908, and 910 of FIG. 9.

In some examples, the disallowed CRM logic circuit 226 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the disallowed CRM logic circuit 226 may be instantiated by any other combination of hardware, software, and/or firmware. For example, the disallowed CRM logic circuit 226 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the chiplet 204, the one or more core chiplets 206, and the one or more memory and I/O controllers 208 of FIGS. 2-6 is illustrated in FIGS. 2-6, one or more of the elements, processes, and/or devices illustrated in FIGS. 2-6 may be combined, divided, re-arranged, omitted, eliminated, and/or implemented in any other way. Further, the one or more example accelerator circuits 220, the example HI circuit 222, the one or more example CRM RRs 224, the example disallowed CRM logic circuit 226, and/or, more generally, the example chiplet 204 of FIGS. 2-6 and/or the example BIOS circuit 214, the example trusted firmware 216, the example access block logic circuit 242, and/or, more generally, the one or more example core chiplets 206 of FIGS. 2-6 and/or the one or more example memory control circuits 228, the example cache stack logic circuit 230, the first example I/O stack logic circuit 232, the second example I/O stack logic circuit 234, the third example I/O stack logic circuit 236, the one or more example memory fabric decoder circuits 238, the example memory fabric CRM agent circuit 240, and/or, more generally, the one or more example memory and I/O controllers 208 of FIGS. 2-6, may be implemented by hardware alone or by hardware in combination with software and/or firmware. Thus, for example, any of the one or more example accelerator circuits 220, the example HI circuit 222, the one or more example CRM RRs 224, the example disallowed CRM logic circuit 226, and/or, more generally, the example chiplet 204 of FIGS. 2-6 and/or the example BIOS circuit 214, the example trusted firmware 216, the example access block logic circuit 242, and/or, more generally, the one or more example core chiplets 206 of FIGS. 2-6 and/or the one or more example memory control circuits 228, the example cache stack logic circuit 230, the first example I/O stack logic circuit 232, the second example I/O stack logic circuit 234, the third example I/O stack logic circuit 236, the one or more example memory fabric decoder circuits 238, the example memory fabric CRM agent circuit 240, and/or, more generally, the one or more example memory and I/O controllers 208 of FIGS. 2-6, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example chiplet 204, the one or more example core chiplets 206, and/or the one or more example memory and I/O controllers 208 of FIGS. 2-6 may include one or more elements, processes, and/or devices in addition to, or instead of, those illustrated in FIGS. 2-6, and/or may include more than one of any or all of the illustrated elements, processes and devices.

Flowchart(s) representative of example machine-readable instructions, which may be executed by programmable circuitry to implement and/or instantiate the chiplet 204, the one or more core chiplets 206, and/or the one or more memory and I/O controllers 208 of FIGS. 2-6 and/or representative of example operations which may be performed by programmable circuitry to implement and/or instantiate the chiplet 204, the one or more core chiplets 206, and/or the one or more memory and I/O controllers 208 of FIGS. 2-6, are shown in FIGS. 7, 8, and 9. The machine-readable instructions may be one or more executable programs or portion(s) of one or more executable programs for execution by programmable circuitry such as the programmable circuitry 2312 shown in the example programmable circuitry platform 2300 discussed below in connection with FIG. 23 and/or may be one or more function(s) or portion(s) of functions to be performed by the example programmable circuitry (e.g., an FPGA) discussed below in connection with FIGS. 24 and/or 25. In some examples, the machine-readable instructions cause an operation, a task, etc., to be carried out and/or performed in an automated manner in the real world. As used herein, "automated" means without human involvement.

FIG. 7 is a flowchart representative of example machine-readable instructions and/or example operations 700 that may be executed, instantiated, and/or performed by example programmable circuitry to implement the one or more core chiplets 206 of FIG. 2. The example machine-readable instructions and/or the example operations 700 of FIG. 7 begin at block 702, at which the one or more core chiplets 206 reserve a region of the memory 202 for use by the chiplet 204 of the SiP 200. For example, the BIOS circuit 214 programs (e.g., populates) the one or more CRM RRs 224 of the chiplet 204 with a range of the memory 202 that is to be reserved as the CRM region 218 for the chiplet 204.

In the illustrated example of FIG. 7, at block 704, the one or more core chiplets 206 verify that the region does not overlap with at least one other reserved region of the memory 202. For example, the trusted firmware 216 verifies that the CRM region 218 does not overlap with at least one other reserved region of the memory 202. Example reserved regions of the memory 202 include regions of the memory 202 allocated for confidential computing technology resources (e.g., TDs, SGX enclaves etc.) and fixed MMIO register ranges of the memory 202.

In the illustrated example of FIG. 7, at block 706, the one or more core chiplets 206 program at least one of a core processor circuit or a memory and I/O controller to permit access to the region by the chiplet 204 and the deny access to the region by at least one other circuit. For example, the BIOS circuit 214 programs one or more of the cache stack logic circuit 230, the first I/O stack logic circuit 232, the second I/O stack logic circuit 234, the third I/O stack logic circuit 236, the memory fabric CRM agent circuit 240, or the access block logic circuit 242 based on the CRM region 218 to cause the one or more memory and I/O controllers 208 to permit access to the region by the chiplet 204 and the deny access to the region by at least one other circuit. In the example of FIG. 7, at block 708, the one or more core chiplets 206 verify that the at least one of the core processor circuit or the memory and I/O controller was programmed. For example, the trusted firmware 216 verifies that the at least one of the core processor circuit or the memory and I/O controller was programmed.

In the illustrated example of FIG. 7, at block 710, based on a first address of a first transaction from the core processor circuit being within the region, the one or more core chiplets 206 block the first transaction. For example, based on a first address of a first transaction from the core processor circuit being within the region, the access block logic circuit 242 blocks the first transaction. At block 712, based on a second address of a second transaction from the core processor circuit being outside the region, the one or more core chiplets 206 permit the second transaction. For example, based on a second address of a second transaction from the core processor circuit being outside the region, the access block logic circuit 242 permits the second transaction.

FIG. 8 is a flowchart representative of example machine-readable instructions and/or example operations 800 that may be executed, instantiated, and/or performed by example programmable circuitry to implement the one or more memory and I/O controllers 208 of FIG. 2. The example machine-readable instructions and/or the example operations 800 of FIG. 8 begin at block 802, at which the one or more memory and I/O controllers 208, based on one or more values programmed by the one or more core chiplets 206 of the SiP 200, permit the chiplet 204 of the SiP 200 to access a region of the memory 202 reserved for use by the chiplet 204. For example, based on one or more values programmed by the BIOS circuit 214, at least one of the first I/O stack logic circuit 232, the second I/O stack logic circuit 234, or the third I/O stack logic circuit 236 permits access to the CRM region 218 by at least two accelerator circuits of the chiplet 204. Additionally or alternatively, based on the one or more values programmed by the BIOS circuit 214, at least one of the cache stack logic circuit 230 or the memory fabric CRM agent circuit 240 permits access to the CRM region 218 by at least two accelerator circuits of the chiplet 204.

In the illustrated example of FIG. 8, at block 804, the one or more memory and I/O controllers 208, based on the one or more values programmed by the one or more core chiplets 206, deny at least one other circuit access the region of the memory 202 reserved for use by the chiplet 204. For example, based on the one or more values programmed by the BIOS circuit 214, at least one of the first I/O stack logic circuit 232, the second I/O stack logic circuit 234, or the third I/O stack logic circuit 236, denies access to the CRM region 218 by at least one other circuit. Additionally or alternatively, based on the one or more values programmed by the BIOS circuit 214, at least one of the cache stack logic circuit 230 or the memory fabric CRM agent circuit 240 denies access to the CRM region 218 by at least one other circuit.

FIG. 9 is a flowchart representative of example machine-readable instructions and/or example operations 900 that may be executed, instantiated, and/or performed by example programmable circuitry to implement the chiplet 204 of FIG. 2. The example machine-readable instructions and/or the example operations 900 of FIG. 9 begin at block 902, at which the chiplet 204, based on a range of a region reserved in the memory 202 for use by the chiplet 204 of the SiP 200, divides the region into at least two sub-regions for at least two accelerator circuits of the chiplet 204. For example, based on the range of the CRM region 218 programmed in the one or more CRM RRs 224, the HI circuit 222 programs one or more registers of the disallowed CRM logic circuit 226 to divides the CRM region 218 into at least two sub-regions for at least two accelerator circuits of the chiplet 204.

In the illustrated example of FIG. 9, at block 904, the chiplet 204 forwards transactions from a first accelerator circuit of the chiplet 204 to a first sub-region of the region based on the transactions including an address in the first sub-region. For example, the disallowed CRM logic circuit 226 forwards transactions from a first accelerator circuit of the chiplet 204 to a first sub-region of the CRM region 218 based on the transactions including an address in the first sub-region. In the example of FIG. 9, the first sub-region is reserved for use by the first accelerator circuit. At block 906, the chiplet 204 blocks transactions from the first accelerator circuit based on the transactions including an address outside of the first sub-region. For example, the disallowed CRM logic circuit 226 blocks transactions from the first accelerator circuit based on the transactions including an address outside of the first sub-region.

In the illustrated example of FIG. 9, at block 908, the chiplet 204 forwards transactions from a second accelerator circuit of the chiplet 204 to a second sub-region of the region based on the transactions including an address in the second sub-region. For example, the disallowed CRM logic circuit 226 forwards transactions from a second accelerator circuit of the chiplet 204 to a second sub-region of the CRM region 218 based on the transactions including an address in the second sub-region. In the example of FIG. 9, the second sub-region is reserved for use by the second accelerator circuit. At block 910, the chiplet 204 blocks transactions from the second accelerator circuit based on the transactions including an address outside of the second sub-region. For example, the disallowed CRM logic circuit 226 blocks transactions from the second accelerator circuit based on the transactions including an address outside of the second sub-region.

As described above, examples disclosed herein include and architecture for memory and interconnect chiplets and fabrics that allow chiplet-resident accelerator circuits in a multi-chiplet XPU and/or SiP to securely provision and confidentially use XPU and/or SiP memory banks (e.g., DDR memory) for AI and generative AI and/or visual transformer processing. Example architecture disclosed herein allows for both confidential computing and non-confidential computing workloads to be run simultaneously while an AI accelerator is using a reserved pool of memory.

Accordingly, examples disclosed herein facilitate AI and/or generative AI inferencing workloads in a SiP at the edge that includes AI accelerator circuits on the same package as CPU core chiplet(s) and memory and I/O chiplet(s). As described herein, an edge processor unit (e.g., an XPU) includes general purpose processor circuits (e.g., CPUs) in addition to accelerator circuits. As such, examples disclosed herein provide additional performance boosts for AI and/or generative AI using accelerator circuits. Examples disclosed herein include a processor architecture that allows an accelerator circuit on a chiplet to access a dedicated and exclusive region of main memory via a combination of simultaneous data paths like CXL.$/UCIe and CXL.IO/PCIe from the accelerator circuit to the memory fabric.

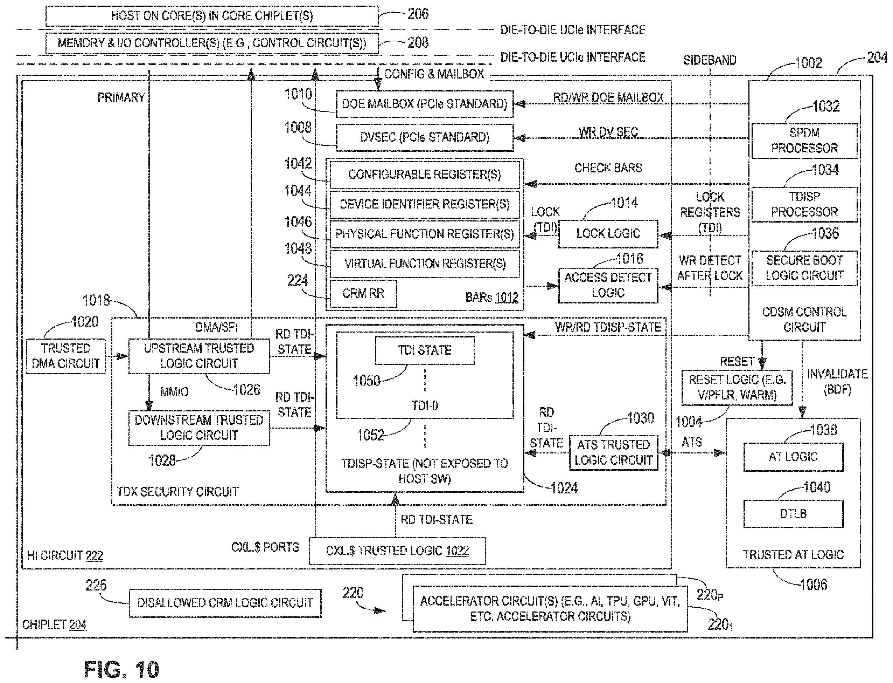

FIG. 10 is a block diagram of an example implementation of the chiplet 204 of FIG. 2. In the example of FIG. 10, the chiplet 204 includes the one or more example accelerator circuits 220, the example HI circuit 222, the one or more example CRM RRs 224, and the example disallowed CRM logic circuit 226. Additionally, the chiplet 204 of FIG. 10 includes an example chiplet device security management (CDSM) circuit 1002, an example reset logic circuit 1004, and an example trusted address translation (AT) logic circuit 1006.

In the example of FIG. 10, the HI circuit 222 includes one or more example designated vendor-specific extended capability (DVSEC) registers 1008, an example data object exchange (DOE) mailbox 1010, one or more example base address registers (BARs) 1012, an example lock logic circuit 1014, an example access detect logic circuit 1016, an example TDX security circuit 1018, an example trusted direct memory access (DMA) circuit 1020, and an example CXL.Cache trusted logic circuit 1022.

In the illustrated example of FIG. 10, the TDX security circuit 1018 includes an example TEE device interface security protocol (TDISP) state 1024, an example upstream trusted logic circuit 1026, an example downstream trusted logic circuit 1028, and an example address translation service (ATS) trusted logic circuit 1030. In some examples, one or more components of the TDX security circuit 1018 are implemented outside of the HI circuit 222. In the example of FIG. 10, the CDSM control circuit 1002 includes an example security protocols and data model (SPDM) processor circuit 1032, an example TEE device interface security protocol (TDISP) processor circuit 1034, and an example secure boot logic circuit 1036. Additionally, the trusted AT logic circuit 1006 includes an example address translation (AT) logic circuit 1038 and an example data translation lookaside buffer (DTLB) 1040.

In the illustrated example of FIG. 10, the chiplet 204 is designed to operate across a disaggregated, multiple chiplet system-on-chip and/or system-in-package. As used herein, SoC is used to refer to a system-on-a-chip and a system-on-chip interchangeably. Additionally, as used herein, SiP is used to refer to a system-in-a-package and a system-in-package interchangeably. The architecture of the chiplet 204 of FIG. 10 provides the flexibility to be integrated with any integrated accelerator circuit, whether on a single chiplet, on an integrated memory and I/O controller, or within a core chiplet.

In the illustrated example of FIG. 10, the CDSM control circuit 1002 is implemented by at least one of a programmable processor circuit or a programmable logic circuit. In the example of FIG. 10, the CDSM control circuit 1002 acts as the device security manager (DSM) for the chiplet 204. In some examples, the CDSM control circuit 1002 is referred to as a DSM circuit or a secure chiplet controller. In the example of FIG. 10, the CDSM control circuit 1002 services the chiplet 204 (e.g., one instance of the CDSM control circuit 1002 per chiplet) and acts on behalf of all of the one or more accelerator circuits 220 on the chiplet 204.

In the illustrated example of FIG. 10, the HI circuit 222 provides an interface between host SW (e.g., on at least one core processor circuit of the one or more core chiplets 206) and the chiplet 204 for confidential computing and confidential communication with the host SW across multiple chiplets (e.g., the one or more memory and I/O controllers 208). As described above, the chiplet 204 includes multiple accelerator circuits (e.g., the one or more accelerator circuits 220).

As described further herein, the HI circuit 222 communicates with the one or more memory and I/O controllers 208 to perform traffic access control over CXL.Cache (CXL.$) data lanes and for CXL.IO/PCIe data lanes. In the example of FIG. 10, the HI circuit 222 supports a capability to indicate to the host SW whether the chiplet 204 is capable of supporting secure and confidential computing via a CRM region of the memory 202. For example, the HI circuit 222 can set a hardware and/or software fuse to indicate whether the chiplet 204 is capable of supporting secure and confidential computing via a CRM region of the memory 202. The host SW will not be able to alter the value of the fuse. In some examples, the HI circuit 222 includes a fuse-override option to securely disable the fuse in the field.

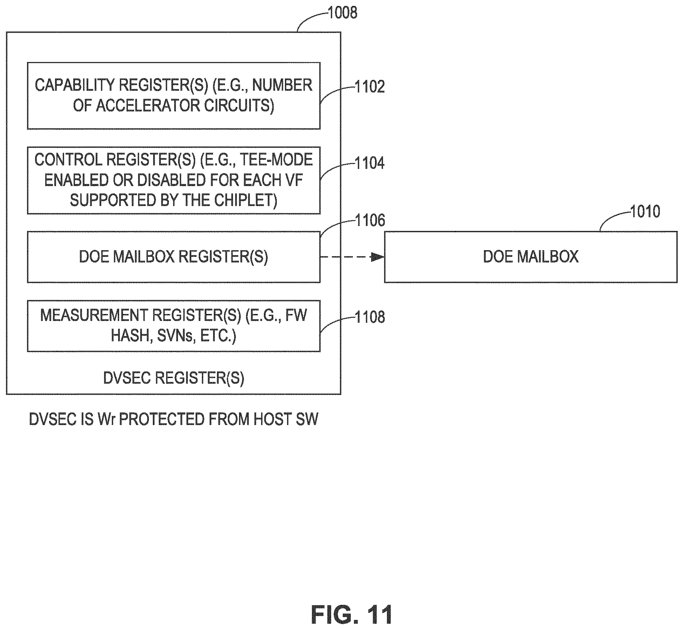

In the illustrated example of FIG. 10, the one or more DVSEC registers 1008. In the example of FIG. 10, the one or more DVSEC registers 1008 implement the capabilities to facilitate confidential computing via an example CRM region of the memory 202. For example, FIG. 11 is a block diagram of the one or more DVSEC registers 1008 of FIG. 10. In the example of FIG. 11, the one or more DVSEC registers 1008 include one or more example capability registers 1102, one or more example control registers 1104, one or more example DOE mailbox registers 1106, and one or more example measurement registers 1108.

In the illustrated example of FIG. 11, the one or more capability registers 1102 store data indicative of the number and/or type of accelerator circuits resident on the chiplet 204. In the example of FIG. 11, the one or more control registers 1104 store data indicative of control parameters for the chiplet 204. For example, the one or more control registers 1104 store data indicative of whether a TEE mode of execution is enabled and/or disabled for each virtual function (VF) supported by the chiplet 204.

In the illustrated example of FIG. 11, a VF can be enabled and/or disabled for a trusted device mode of operation as a trusted device interface (TDI). In the example of FIG. 11, each accelerator circuit on the chiplet 204 can represent one or more VFs. As such, the one or more control registers 1104 store data indicative of whether a TEE mode of execution is enabled and/or disabled for each accelerator circuit on the chiplet 204.

In the illustrated example of FIG. 11, the one or more DOE mailbox registers 1106 store data to facilitate communication via the DOE mailbox 1010. In the example of FIG. 11, the one or more measurement registers 1108 store data indicative of security measurements for the one or more accelerator circuits 220 of the chiplet 204. For example, the one or more measurement registers 1108 store a security measurement for each accelerator circuit of the chiplet 204. In the example of FIG. 11, security measurements include a hash of firmware of an accelerator circuit and a security version number (SVN) of an accelerator circuit.

Returning to FIG. 10, the DOE mailbox 1010 is used for host SW to chiplet 204 communication across one or more chiplets (e.g., routed through the one or more memory and I/O controllers 208). In some examples, the HI circuit 222 includes more than one instance of the DOE mailbox 1010. For example, if the chiplet 204 includes a single accelerator circuit on a single die, then the HI circuit 222 includes one instance of the DOE mailbox 1010. Additionally or alternatively, if the chiplet 204 includes two or more accelerator circuits on a single die, then the HI circuit 222 includes one instance of the DOE mailbox 1010.

In some examples, if the chiplet 204 includes two or more accelerator circuits where each accelerator circuit exposes itself as a separate device (e.g., each accelerator circuit is implemented on a separate die of the chiplet 204), then the HI circuit 222 includes two or more instances of the DOE mailbox 1010 (e.g., one instance per accelerator circuit). As such, the DOE mailbox 1010 provides flexibility of use and simplification for design and the architecture of the DOE mailbox 1010 allows for host SW to view the HI circuit 222 as including an instance of the DOE mailbox 1010 per accelerator circuit of the chiplet 204. In the example of FIG. 10, the CDSM control circuit 1002 manages the components of the chiplet 204 and as such, the CDSM control circuit 1002 manages the one or more instances of the DOE mailbox 1010.

In the illustrated example of FIG. 10, the one or more BARs 1012 include one or more example configurable registers 1042, one or more example device identifier registers 1044, one or more example physical function (PF) registers 1046, one or more example virtual function (VF) registers 1048, and the one or more example CRM RRs 224. In the example of FIG. 10, the one or more configurable registers 1042 are configurable by at least one of host SW or BIOS of the SiP 200. In some examples, the one or more configurable registers 1042 implement the one or more CRM RRs 224.

In the illustrated example of FIG. 10, one or more device identifier registers 1044 store data indicative of one or more identifiers of the chiplet 204 and/or accelerator circuits of the chiplet 204. Example device identifiers include a bus, device, function (BDF) identifier, an alternate routing ID (RID) interpretation (ARI) identifier, an RID, a role and identity-based ID, a fabric IO-stack source ID, among others. In the example of FIG. the one or more PF registers 1046 indicate the address space of the one or more BARs 1012 that is dedicated to one or more physical devices of the chiplet 204. Additionally, the one or more VF registers 1048 indicate the address space of the one or more BARs 1012 that is dedicated to one or more virtual devices virtualized on the one or more physical devices of the chiplet 204.

As described above, the one or more BARs 1012 can be provisioned and accessed by the host or any other circuit on another chiplet. In the example of FIG. 10, the CDSM control circuit 1002 locks the one or more BARs 1012 via the lock logic circuit 1014 per one or more example TDI states 1050 of the TDISP state 1024 to initiate confidential operation of the chiplet 204. After the CDSM control circuit 1002 locks the one or more BARs 1012 via the lock logic circuit 1014, the one or more BARs 1012 cannot be modified by the host SW or any other FW on any other chiplet.

In the illustrated example of FIG. 10, the design of the lock logic circuit 1014 may vary based on implementation. For example, the one or more BARs 1012 could be implemented as write once registers that trigger the lock logic circuit 1014 to prevent any further writes to or reads of the write once register (e.g., in the MMIO space). In the example of FIG. 10, the access detect logic circuit 1016 detects whether a write attempt has been made to the one or more BARs 1012 after locking. In this manner, the access detect logic circuit 1016 can detect whether an entity is attempting to tamper with the one or more BARs 1012. In the event the access detect logic circuit 1016 detects an attempt to write to the one or more BARs 1012, the CDSM control circuit 1002 takes appropriate action to secure the one or more TDI states 1050 (e.g., the CDSM control circuit 1002 changes at least one of the one or more TDI states 1050). Table 1 below illustrates unauthorized writes to the registers that are detected by the access detect logic circuit 1016.

**Table 1**

| **Register** | **Description** |
|---|---|
| Device Identifier (e.g., BDF, ARI, RID, etc.) | Security depends on the device identifier of a device. As such, the device identifier should not be manipulated to send any spoofed identifiers. |
| Built-in Self-test (BIST) Register, BAR Registers, Expansion read-only memory (ROM) BAR | Transition a corresponding TDI state to ERROR |
| PCI Power Management Capability | If the state of a lead to a VF is changing state, then transition a corresponding TDI state to ERROR |
| Device Control Registers (including Ctlr 2 & 3) | Transition a corresponding TDI state to ERROR if any of the following bits are changed: Extended Tag Field Enable, Phantom Fn enable, Initiate FLR, Enable No Snoop, 10-bit/14-bit Requester enable |
| Enhanced Allocation capability, Resizable BAR extended capability, VF Resizable BAR extended capability, ARI extended capability, process address space ID (PASID) extended capability | Transition a corresponding TDI state to ERROR |
| Vendor Specific Capability, Vendor specific extended capability, DVSEC | Identify any registers of the chiplet and assess security impact |
| Multicast extended capability | May not be supported; Transition a corresponding TDI state to ERROR |
| Dynamic Power allocation extended capability | Assess impact to registers of the chiplet |
| Transaction layer packet (TLP) processing hints (TPH) Requester extended capability | Assess impact to the chiplet |
| Shadow functions extended capability | May not be supported; Transition a corresponding TDI state to ERROR |
| Page Request extended capability, single root I/O virtualization (SR-IOV) extended capability | Transition a corresponding TDI state to ERROR |

In the illustrated example of FIG. 10, the design of the access detect logic circuit 1016 may vary based on implementation. In the example of FIG. 10, in the event that an entity attempts to access the one or more BARs 1012, the access detect logic circuit 1016 detects the attempted access. Additionally, the access detect logic circuit 1016 checks for the appropriate security privilege(s) to access the one or more BARs 1012 before permitting the attempted access to continue. If an attempted write request is from an unauthorized entity (e.g., host SW), then the access detect logic circuit 1016 rejects the attempted access by dropping the write request. Additionally or alternatively, if an attempted read request is from an unauthorized entity (e.g., host SW), then the access detect logic circuit 1016 rejects the attempted access by returning zeros for the read request and an interrupt to an entity with the requisite privileges to access the one or more BARs 1012.

In the illustrated example of FIG. 10, the TDISP state 1024 is a memory space created for purposes of implementing the TDISP protocol for secure access to a reserved region of the memory 202. For example, the TDISP state 1024 stores the one or more example TDI states 1050 and one or more example TDI structures 1052. In the example of FIG. 10, the one or more TDI states 1050 of the TDISP state 1024 are adjusted based on TDISP state transitions as described further herein.

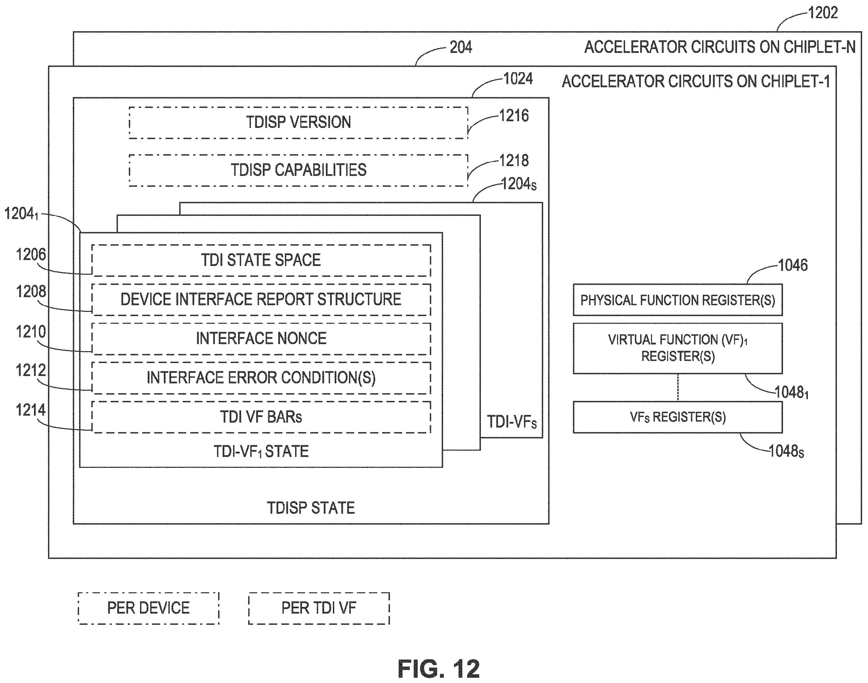

FIG. 12 is a block diagram of an example implementation of the TDISP state 1024 of FIG. 10. In the example of FIG. 12, the TDISP state 1024 represents the TDISP state of multiple accelerator circuits on the chiplet 204. Additionally if the SiP 200 includes *N* chiplets each having accelerator circuits, then each of the *N* chiplets includes a similar TDISP state. For example, an *N*th example chiplet 1202 includes a TDISP state similar to the TDISP state 1024.

In the illustrated example of FIG. 12, the CDSM control circuit 1002 accesses the TDISP state 1024 to manage one or more example TDI states 1204 of the chiplet 204. For example, the TDISP state 1024 includes a first example TDI state 1204₁ through an Sth example TDI state 1204s. In the example of FIG. 12, each of the one or more example TDI states 1204 corresponds to a virtual function. As such, each of the one or more TDI states 1204 is associated with one or more of the one or more VF registers 1048. For example, the one or more VF registers 1048 include one or more first example VF registers 1048₁ through one or more Sth example VF registers 1048s that are associated with the first TDI state 1204₁ through the Sth TDI state 1204s, respectively.

In the illustrated example of FIG. 12, each of the one or more TDI states 1204 includes an example TDI state space 1206, an example device interface report structure 1208, an example interface nonce 1210, one or more example interface error conditions 1212, and one or more TDI VF BARs 1214. Additionally, the TDISP state 1024 includes an example TDISP version 1216 and one or more example TDISP capabilities 1218. As described herein, various components of the HI circuit 222 (e.g., the lock logic circuit 1014, the access detect logic circuit 1016, etc.) can read one or more registers of the TDISP state 1024 to enforce TDISP security requirements and complete TDISP-related flows.

Returning to FIG. 10, the upstream trusted logic circuit 1026 adds a T-bit to transaction layer packets (TLP) originating from the TDX security circuit 1018 of the HI circuit 222. For example, a T-bit indicates that a transaction (e.g., a request) originated from a TD for a TDI or is destined for a TD from a TDI. In the example of FIG. 10, the upstream trusted logic circuit 1026 sets T-bits based on the one or more TDI states 1050.

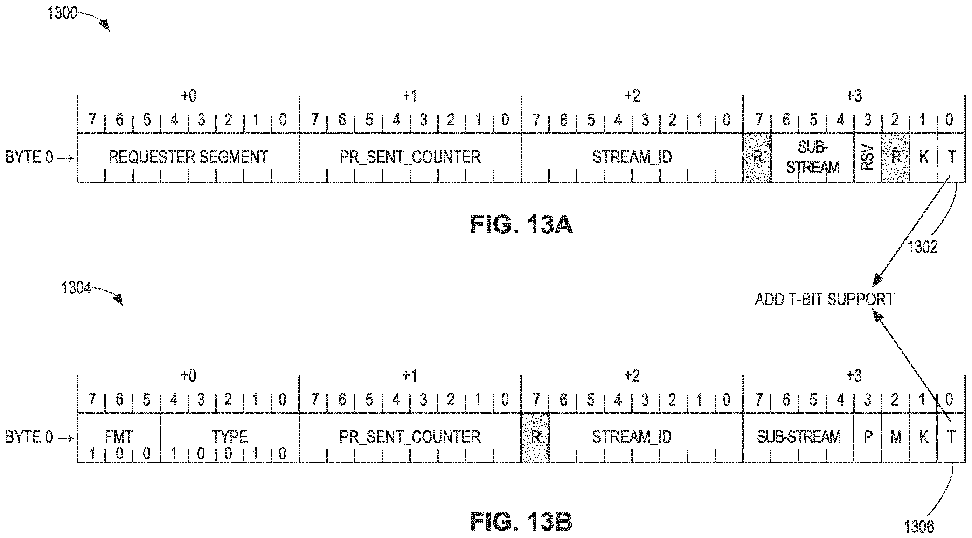

In the illustrated example of FIG. 10, the upstream trusted logic circuit 1026 adds a T-bit to a header of a TLP. For example, FIG. 13A is a block diagram illustrating a first example header 1300 including an example T-bit 1302. In the example of FIG. 13A, the first header 1300 is implemented as an orthogonal header content (OHC-C) header in compliance with the flow control unit (FLIT) mode of operation of the PCIe 6.0 standard. FIG. 13B is a block diagram illustrating a second example header 1304 including an example T-bit 1306. In the example of FIG. 13B, the second header 1304 is implemented as an integrity and data encryption (IDE) header in compliance with the non-FLIT mode of operation of the PCIe 5.0 standard and the PCIe 6.0 standard.

Returning to FIG. 10, the upstream trusted logic circuit 1026 adds a prefix to an OHC-C header and/or an IDE header according to root port (RP) rules defined by the PCIe standard. For example, the upstream trusted logic circuit 1026 accesses the TDISP state 1024 to perform checking according to the RP rules. In the example of FIG. 10, the downstream trusted logic circuit 1028 performs T-bit checking in MMIO transactions originating from the host and targeting memory and/or registers of any device on the chiplet 204.

For example, the downstream trusted logic circuit 1028 checks for T-bit value when the one or more TDI states 1050 are a run state. In the example of FIG. 10, the ATS trusted logic circuit 1030 adds T-bits to ATS transaction for upstream transactions. Additionally, the ATS trusted logic circuit 1030 checks T-bits for downstream transactions against the one or more TDI states 1050.

In the illustrated example of FIG. 10, as described above, the chiplet 204 includes three CXL.Cache data lanes. In the example of FIG. 10, the CXL.Cache trusted logic circuit 1022 secures CXL.Cache traffic per TDI state of the one or more TDI states 1050. For example, the CXL.Cache trusted logic circuit 1022 facilitates transport of a T-bit value utilizing the CXL.Cache protocol and performs T-bit processing on CXL.Cache data paths.

In the illustrated example of FIG. 10, the CXL.Cache trusted logic circuit 1022 accesses the one or more TDI states 1050. Based on the one or more TDI states 1050, the CXL.Cache trusted logic circuit 1022 either allows or disallows (e.g., blocks) traffic on the CXL.Cache data paths. In the example of FIG. 10, CXL.Cache trusted logic circuit 1022 interfaces with the TDISP state 1024 and CXL.Cache and/or CXL.Mem controllers (e.g., the cache stack logic circuit 230 and/or the memory fabric CRM agent circuit 240 of the one or more memory and I/O controllers 208) for traffic access control.

In the illustrated example of FIG. 10, the reset logic circuit 1004
the chiplet 204 triggers a cleanup of an internal state of the chiplet 204 on state transitions of the one or more TDI states 1050. For example, the reset logic circuit 1004 executes a reset, as requested by CDSM control circuit 1002. In the example of FIG. 10, the reset logic circuit 1004 can utilize existing reset features (e.g., a PFLR, a virtual function reset (VFLR), a warm reset, etc.) of the chiplet 204 and/or the SiP 200. Additionally, in the example of FIG. 10, the reset logic circuit 1004 interfaces with the TDISP state 1024 and sets a trigger to block traffic across all data paths (e.g., CXL.$/UCIe and CXL.IO/PCIe data paths).

In the illustrated example of FIG. 10, read-only memory (ROM) of the CDSM control circuit 1002 is responsible for performing FW authentication for the one or more accelerator circuits 220 of the chiplet 204. For example, ROM of the CDSM control circuit 1002 takes FW measurements (e.g., generates FW image hashes, collects SVNs, etc.) for every accelerator circuit identified in the one or more DVSEC registers 1008. As described above, the one or more DVSEC registers 1008 are access controlled and are managed by the CDSM control circuit 1002 to be readable by SW but not writeable by SW. For example, the CDSM control circuit 1002 controls and/or manages the one or more DVSEC registers 1008 based on one or more access policy registers of the chiplet 204. In the example of FIG. 10, the CDSM control circuit 1002 does not allow any host SW, host FW, and/or any other circuit to update the FW measurements of the chiplet 204 once ROM of the CDSM control circuit 1002 has written the FW measurements.

In the illustrated example of FIG. 10, in the event of a crash of the SiP 200, the chiplet 204, and/or the one or more accelerator circuits 220, the chiplet 204 ensures that no user data is ever included in a crash dump file. For example, the CDSM control circuit 1002 updates crash dump logic of the chiplet 204 to not include any user data from any source associated with the chiplet 204 in a crash dump file. Example sources associated with the chiplet 204 include a cache of the chiplet 204, a register of the chiplet 204, a reserved memory region for the chiplet 204 (e.g., the CRM region 218), a local static random-access memory (SRAM) of the chiplet 204, etc.), or elsewhere. In some examples, the CDSM control circuit 1002 disables generation of a crash dump file when any VF is enabled (e.g., when any TEE mode of execution is enabled).

In the illustrated example of FIG. 10, the SPDM processor circuit 1032 is implemented as firmware of the CDSM control circuit 1002. In the example of FIG. 10, the SPDM processor circuit 1032 reads SPDM messages from the DOE mailbox 1010 and performs processing actions such as transporting SPDM messages to a root of trust (RoT) for the SiP 200. Communication between the SPDM processor circuit 1032 of the CDSM control circuit 1002 and the RoT occurs over a secure sideband interface utilizing a secure protocol such as the UCIe protocol. In some examples, the SPDM processor circuit 1032 of the CDSM control circuit 1002 communicates with the RoT using a vendor-specific protocol such as events and mailboxes over the secured sideband interface.

In the illustrated example of FIG. 10, the TDISP processor circuit 1034 is implemented as firmware of the CDSM control circuit 1002. In the example of FIG. 10, the TDISP processor circuit 1034 reads TDISP messages from the DOE mailbox 1010 and performs actions based on (e.g., required by) the TDISP messages. Additionally, the TDISP processor circuit 1034 sends messages to the host via the DOE mailbox 1010. As described above, firmware of the CDSM control circuit 1002 implements the TDISP processor circuit 1034. As such, the TDISP processor circuit 1034 has access to multiple hardware registers of the chiplet 204 (e.g., the one or more registers described above in Table 1).

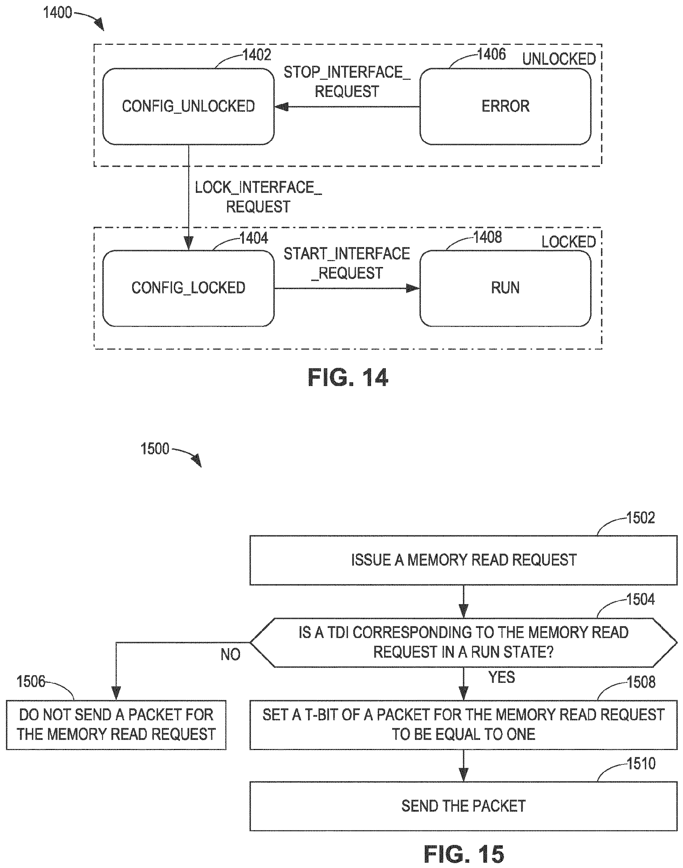

As described above, the one or more TDI states 1050 transition between different states during operation of the chiplet 204. In the example of FIG. 10, the TDISP processor circuit 1034 manages state machine(s) for the one or more TDI states 1050 as the one or more TDI states 1050 transition between states. FIG. 14 is a flow diagram representative of an example state machine 1400 of the one or more TDI states 1050 that is managed by the TDISP processor circuit 1034 of FIG. 10.

In the illustrated example of FIG. 14, in an example configuration unlocked state 1402, the TDISP processor circuit 1034 allows a VMM (e.g., on the host) to configure one or more VFs of the chiplet 204. For example, in the configuration unlocked state 1402, a VMM can configure one or more BARs, MMIO and/or DMA, DTLB, etc. of one or more VFs of the chiplet 204. Additionally, in the configuration unlocked state 1402, the TDISP processor circuit 1034 instructs the downstream trusted logic circuit 1028 to discard any transaction with a T-bit equal to one, including completions.

In the illustrated example of FIG. 14, based on a lock interface request (e.g., from the VMM), the TDISP processor circuit 1034 transitions the one or more TDI states 1050 from the configuration unlocked state 1402 to an example configuration locked state 1404. In the configuration locked state 1404, the TDISP processor circuit 1034 ensures that programming of the one or more BARs 1012 is non-overlapping. Additionally, in the configuration locked state 1404, the TDISP processor circuit 1034 locks (e.g., via the lock logic circuit 1014) respective configurations of the one or more TDI states 1050.

In the illustrated example of FIG. 14, in the configuration locked state 1404, the TDISP processor circuit 1034 creates respective device interface report structures in the one or more TDI states 1050. Additionally, in the configuration locked state 1404, the TDISP processor circuit 1034 instructs the downstream trusted logic circuit 1028 to discard (e.g., reject) memory requests and completions. For example, the TDISP processor circuit 1034 instructs the downstream trusted logic circuit 1028 to discard all memory requests, including any request have with a T-bit equal to one.

In the illustrated example of FIG. 14, in the configuration locked state 1404, the TDISP processor circuit 1034 detects (e.g., via the access detect logic circuit 1016) tampering with the one or more TDI states 1050 by the VMM, other host SW, and/or another circuit. For example, the TDISP processor circuit 1034 detects tampering with one or more control and status registers (CSRs), one or more BARs of the one or more VFs, one or more MMIO and/or DMA registers, one or more DTLBs, one or more internal tables etc. of the one or more TDI states 1050. If tampering is detected, the TDISP processor circuit 1034 of the CDSM control circuit 1002 causes the one or more TDI states 1050 to transition to an example error state 1406.

In the illustrated example of FIG. 14, based on a start interface request (e.g., from the VMM), the TDISP processor circuit 1034 transitions the one or more TDI states 1050 from the configuration locked state 1404 to an example run state 1408. In the example of FIG. 14, in the run state 1408, the TDISP processor circuit 1034 detects (e.g., via the access detect logic circuit 1016) tampering with the one or more TDI states 1050 by the VMM, other host SW, and/or another circuit as described above. As described above, if tampering is detected, the TDISP processor circuit 1034 of the CDSM control circuit 1002 causes the one or more TDI states 1050 to transition to the error state 1406.

In the illustrated example of FIG. 14, in the run state 1408, the TDISP processor circuit 1034 instructs the upstream trusted logic circuit 1026 to issue memory read and write requests (e.g., via the trusted DMA circuit 1020) with a T-bit equal to one. Additionally, in the run state 1408, the TDISP processor circuit 1034 instructs the downstream trusted logic circuit 1028 to process completions. In the run state 1408, the TDISP processor circuit 1034 instructs the downstream trusted logic circuit 1028 to process memory requests (e.g., MMIO requests) if the memory requests include a T-bit equal to one. Additionally, in the run state 1408, TDISP processor circuit 1034 instructs the downstream trusted logic circuit 1028 to add a T-bit equal to one to completions.

As described above, if tampering is detected in either the configuration locked state 1404 or the run state 1408, the TDISP processor circuit 1034 of the CDSM control circuit 1002 causes the one or more TDI states 1050 to transition to the error state 1406. In the error state 1406, the TDISP processor circuit 1034 securely wipes (e.g., erases) all data within a TD of the one or more TDI states 1050. For example, a secure wipe includes clearing all caches of the chiplet 204 that contain all user data (e.g., kernels and data operated on and/or produced by kernels). Additionally or alternatively, a secure wipe includes the TDISP processor circuit 1034 instructing the reset logic circuit 1004 to initiate a VFLR and/or a function level reset (FLR).

Other events that cause the TDISP processor circuit 1034 to transition the one or more TDI states 1050 to the error state 1406 include a change to a configuration of a VF (including a change to a requester ID), an FLR of one or more TDIs and/or VFs, a device and/or PF reset (e.g., PFLR) of all TDIs, a firmware update for one or more components of the chiplet 204, and a device unrecoverable error (e.g., completion with an unsupported request (UR) or a completer abort (CA), a completion timeout (TO), etc.). Additionally or alternatively, other events that cause the TDISP processor circuit 1034 to transition the one or more TDI states 1050 to the error state 1406 include one or more debug ports of the chiplet 204 being enabled and an internal transition of the chiplet 204 to a debug mode. In some examples, other events that cause the TDISP processor circuit 1034 to transition the one or more TDI states 1050 to the error state 1406 include an MMIO range being updated during operation of the chiplet 204.

In the illustrated example of FIG. 14, the TDISP processor circuit 1034 does not transition the one or more TDI states 1050 to the error state 1406 in some examples. For example, for any VMM operation (e.g., administrator action, PFs, etc.) on the chiplet 204 that does not impact security of the one or more TDI states 1050, the TDISP processor circuit 1034 does not transition the one or more TDI states 1050 to the error state when the one or more TDI states 1050 are in the configuration locked state 1404 or the run state 1408. In such examples, the TDISP processor circuit 1034 records the VMM operation in one or more report and log error messages.

Returning to FIG. 10, the CDSM control circuit 1002 can also perform secure boot operations. For example, the secure boot logic circuit 1036 prevents unauthorized software from running during startup of the chiplet 204. In the example of FIG. 10, the secure boot logic circuit 1036 verifies digital signatures of each component of the boot process. For example, the secure boot logic circuit 1036 verifies the digital signatures of the bootloader and operating system kernel of the chiplet 204 against a database of trusted keys. If any component fails the signature verification, the secure boot logic circuit 1036 prevents the chiplet 204 from booting up.

In the illustrated example of FIG. 10, the chiplet 204 can issue DMA read and/or write requests to the memory 202. For example, the trusted DMA circuit 1020 generates DMA read and/or write requests and provides the DMA read and/or write requests to the upstream trusted logic circuit 1026. In the example of FIG. 10, the upstream trusted logic circuit 1026 forwards the DMA read and/or write requests from the chiplet 204 to the one or more memory and I/O controllers 208 to access the memory 202.

In the illustrated example of FIG. 10, the trusted AI logic circuit 1006 performs trusted address translation between addresses of the host memory fabric and address of the chiplet 204. For example, the AT logic circuit 1038 translates an address from a physical memory address space of the chiplet 204 to a virtual memory address space of the one or more accelerator circuits 220. Additionally, as described above, the ATS trusted logic circuit 1030 adds T-bits to ATS transaction for upstream transactions and checks T-bits for downstream transactions against the one or more TDI states 1050.

In the illustrated example of FIG. 10, the result of successful trusted address translation is the population of an address translation cache (ATC) (e.g., the DTLB 1040) on the chiplet (e.g., the chiplet 204, the one or more core chiplets 206, etc.) that includes the device (e.g., an accelerator circuit, a core processor circuit, etc.) having the translated address. Thus, once the trusted AT logic circuit 1006 has translated an address in a downstream transaction, the chiplet 204 can utilize the translated address directly on the chiplet 204. Additionally, once the trusted AT logic 1006 has translated an address for an upstream transaction, the HI circuit 222 can utilize the translated address directly on the memory fabric of the SiP 200 (e.g., the one or more memory and I/O controllers 208).

The chiplet 204 of FIG. 10 may be instantiated (e.g., creating an instance of, bring into being for any length of time, materialize, implement, etc.) by programmable circuitry such as a Central Processor Unit (CPU) executing first instructions. Additionally or alternatively, the chiplet 204 of FIG. 10 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 10 may, thus, be instantiated at the same or different times. Some or all of the circuitry of FIG. 10 may be instantiated, for example, in one or more threads executing concurrently on hardware and/or in series on hardware. Moreover, in some examples, some or all of the circuitry of FIG. 10 may be implemented by microprocessor circuitry executing instructions and/or FPGA circuitry performing operations to implement one or more virtual machines and/or containers.

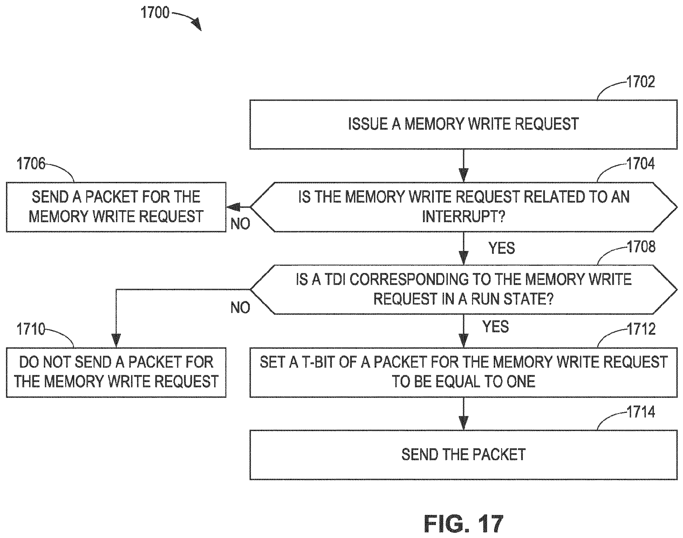

In some examples, the trusted DMA circuit 1020 is instantiated by programmable circuitry executing trusted DMA instructions and/or configured to perform operations such as those represented by the flowchart(s) of FIGS. 15 and/or 17. In some examples, the HI circuit 222 includes means for directly accessing memory. For example, the means for directly accessing may be implemented by the trusted DMA circuit 1020. In some examples, the trusted DMA circuit 1020 may be instantiated by programmable circuitry such as the example programmable circuitry 2312 of FIG. 23. For instance, the trusted DMA circuit 1020 may be instantiated by the example microprocessor 2400 of FIG. 24 executing machine-executable instructions such as those implemented by at least block 1502 of FIG. 15 and at least block 1702 of FIG. 17.

In some examples, the trusted DMA circuit 1020 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the trusted DMA circuit 1020 may be instantiated by any other combination of hardware, software, and/or firmware. For example, the trusted DMA circuit 1020 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

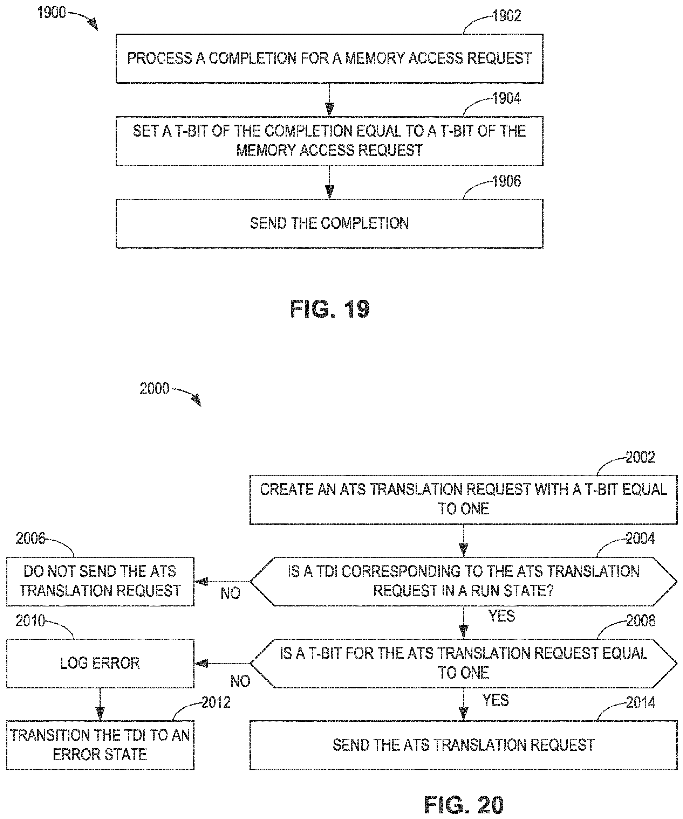

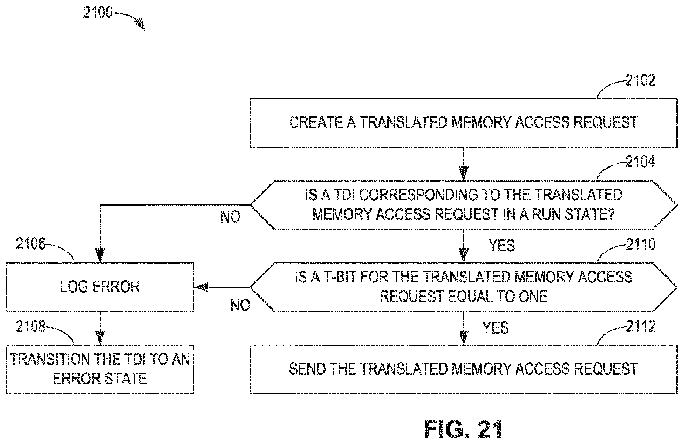

In some examples, the upstream trusted logic circuit 1026 is instantiated by programmable circuitry executing trusted upstream processing instructions and/or configured to perform operations such as those represented by the flowchart(s) of FIGS. 15, 17, 20 and/or 21. In some examples, the HI circuit 222 includes means for processing an upstream packet. For example, the means for processing may be implemented by the upstream trusted logic circuit 1026. In some examples, the upstream trusted logic circuit 1026 may be instantiated by programmable circuitry such as the example programmable circuitry 2312 of FIG. 23. For instance, the upstream trusted logic circuit 1026 may be instantiated by the example microprocessor 2400 of FIG. 24 executing machine-executable instructions such as those implemented by at least blocks 1504, 1506, 1508, and 1510 of FIG. 15, at least blocks 1704, 1706, 1708, 1710, 1712, and 1714 of FIG. 17, at least blocks 2006, 2008, and 2014 of FIG. 20, and at least blocks 2110 and 2112 of FIG. 21.

In some examples, the upstream trusted logic circuit 1026 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the upstream trusted logic circuit 1026 may be instantiated by any other combination of hardware, software, and/or firmware. For example, the upstream trusted logic circuit 1026 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

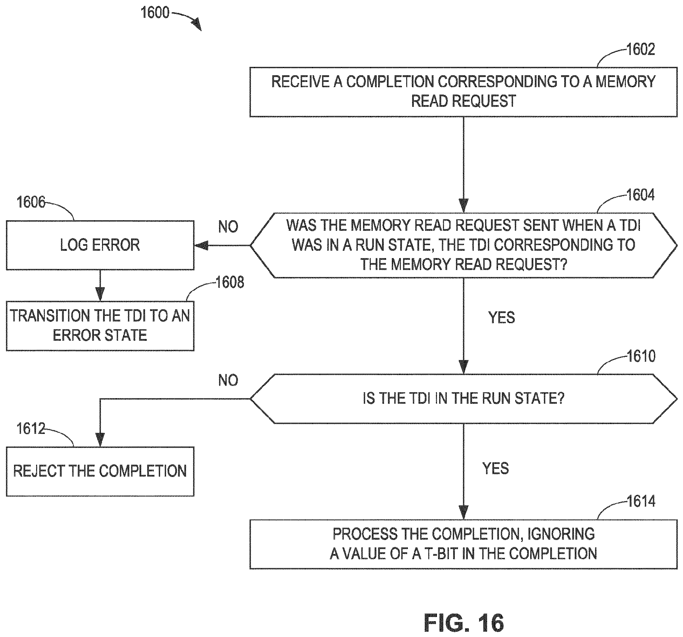

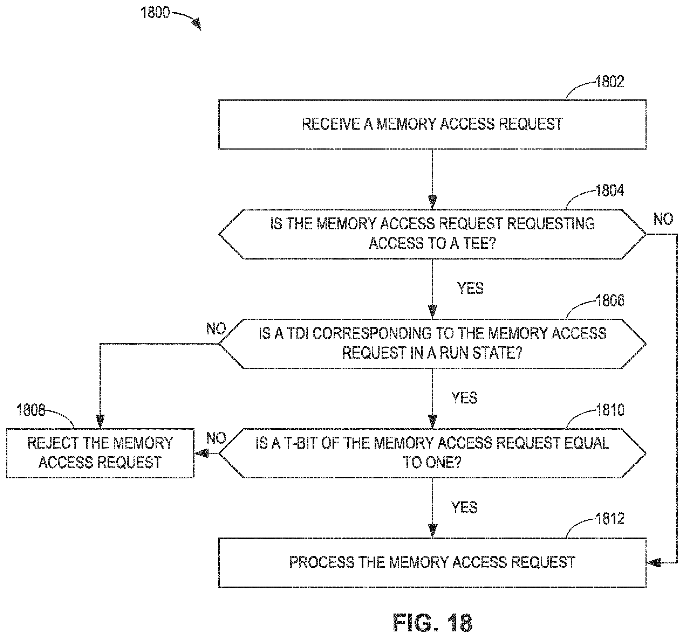

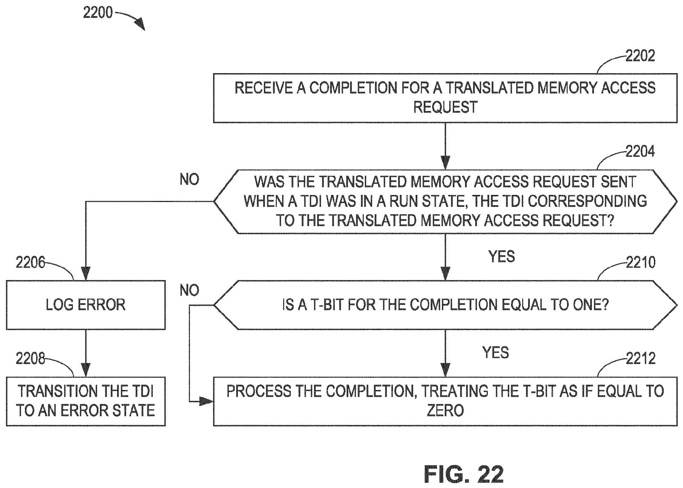

In some examples, the downstream trusted logic circuit 1028 is instantiated by programmable circuitry executing trusted downstream processing instructions and/or configured to perform operations such as those represented by the flowchart(s) of FIGS. 16, 18, 19, and/or 22. In some examples, the HI circuit 222 includes means for processing a downstream packet. For example, the means for processing may be implemented by the downstream trusted logic circuit 1028. In some examples, the downstream trusted logic circuit 1028 may be instantiated by programmable circuitry such as the example programmable circuitry 2312 of FIG. 23. For instance, the downstream trusted logic circuit 1028 may be instantiated by the example microprocessor 2400 of FIG. 24 executing machine-executable instructions such as those implemented by at least blocks 1602, 1604, 1610, 1612, and 1614 of FIG. 16, at least blocks 1802, 1804, 1806, 1808, 1810, and 1812 of FIG. 18, at least blocks 1902, 1904, and 1906 of FIG. 19, and at least blocks 2202, 2204, 2210, and 2212 of FIG. 22.

In some examples, the downstream trusted logic circuit 1028 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the downstream trusted logic circuit 1028 may be instantiated by any other combination of hardware, software, and/or firmware. For example, the downstream trusted logic circuit 1028 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the ATS trusted logic circuit 1030 is instantiated by programmable circuitry executing trusted ATS instructions and/or configured to perform operations such as those represented by the flowchart(s) of FIGS. 20 and/or 21. In some examples, the HI circuit 222 includes means for translating an address. For example, the means for translating may be implemented by the ATS trusted logic circuit 1030. In some examples, the ATS trusted logic circuit 1030 may be instantiated by programmable circuitry such as the example programmable circuitry 2312 of FIG. 23. For instance, the ATS trusted logic circuit 1030 may be instantiated by the example microprocessor 2400 of FIG. 24 executing machine-executable instructions such as those implemented by at least blocks 2002 and 2004 of FIG. 20 and at least blocks 2102 and 2104 of FIG. 21.

In some examples, the ATS trusted logic circuit 1030 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the ATS trusted logic circuit 1030 may be instantiated by any other combination of hardware, software, and/or firmware. For example, the ATS trusted logic circuit 1030 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

In some examples, the TDISP processor circuit 1034 is instantiated by programmable circuitry executing TDISP processing instructions and/or configured to perform operations such as those represented by the flowchart(s) of FIGS. 16, 29, 21, and/or 22. In some examples, the CDSM control circuit 1002 includes means for performing a security protocol. For example, the means for performing may be implemented by the TDISP processor circuit 1034. In some examples, the TDISP processor circuit 1034 may be instantiated by programmable circuitry such as the example programmable circuitry 2312 of FIG. 23. For instance, the TDISP processor circuit 1034 may be instantiated by the example microprocessor 2400 of FIG. 24 executing machine-executable instructions such as those implemented by at least blocks 1606 and 1608 of FIG. 16, at least blocks 2010 and 2012 of FIG. 20, at least blocks 2106 and 2108 of FIG. 21, and at least blocks 2206 and 2208 of FIG. 22.

In some examples, the TDISP processor circuit 1034 may be instantiated by hardware logic circuitry, which may be implemented by an ASIC, XPU, or the FPGA circuitry 2500 of FIG. 25 configured and/or structured to perform operations corresponding to the machine-readable instructions. Additionally or alternatively, the TDISP processor circuit 1034 may be instantiated by any other combination of hardware, software, and/or firmware. For example, the TDISP processor circuit 1034 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the chiplet 204 of FIG. 2 is illustrated in FIG. 10, one or more of the elements, processes, and/or devices illustrated in FIG. 10 may be combined, divided, re-arranged, omitted, eliminated, and/or implemented in any other way. Further, the one or more example DVSEC registers 1008, the example DOE mailbox 1010, the one or more example configurable registers 1042, the one or more example device identifier registers 1044, the one or more example PF registers 1046, the one or more example VF registers 1048, the one or more example CRM RRs 224, and/or, more generally, the one or more BARs 1012, the example lock logic circuit 1014, the example access detect logic circuit 1016, the example TDISP state 1024, the example upstream trusted logic circuit 1026, the example downstream trusted logic circuit 1028, the example ATS trusted logic circuit 1030, and/or, more generally, the example TDX security circuit 1018, the example trusted DMA circuit 1020, the example CXL.Cache trusted logic circuit 1022, and/or, more generally, the example HI circuit 222, the example SPDM processor circuit 1032, the example TDISP processor circuit 1034, the example secure boot logic circuit 1036, and/or, more generally, the example CDSM control circuit 1002, the example reset logic circuit 1004, the example AT logic circuit 1038, the example DTLB 1040, and/or, more generally, the example trusted AT logic circuit 1006, may be implemented by hardware alone or by hardware in combination with software and/or firmware. Thus, for example, any of the one or more example DVSEC registers 1008, the example DOE mailbox 1010, the one or more example configurable registers 1042, the one or more example device identifier registers 1044, the one or more example PF registers 1046, the one or more example VF registers 1048, the one or more example CRM RRs 224, and/or, more generally, the one or more BARs 1012, the example lock logic circuit 1014, the example access detect logic circuit 1016, the example TDISP state 1024, the example upstream trusted logic circuit 1026, the example downstream trusted logic circuit 1028, the example ATS trusted logic circuit 1030, and/or, more generally, the example TDX security circuit 1018, the example trusted DMA circuit 1020, the example CXL.Cache trusted logic circuit 1022, and/or, more generally, the example HI circuit 222, the example SPDM processor circuit 1032, the example TDISP processor circuit 1034, the example secure boot logic circuit 1036, and/or, more generally, the example CDSM control circuit 1002, the example reset logic circuit 1004, the example AT logic circuit 1038, the example DTLB 1040, and/or, more generally, the example trusted AT logic circuit 1006, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example chiplet 204 of FIG. 10 may include one or more elements, processes, and/or devices in addition to, or instead of, those illustrated in FIG. 10, and/or may include more than one of any or all of the illustrated elements, processes, and devices.

Flowchart(s) representative of example machine-readable instructions, which may be executed by programmable circuitry to implement and/or instantiate the HI circuit 222 and/or the chiplet 204 of FIG. 10 and/or representative of example operations which may be performed by programmable circuitry to implement and/or instantiate the HI circuit 222 and/or the chiplet 204 of FIG. 10, are shown in FIGS. 15-22. The machine-readable instructions may be one or more executable programs or portion(s) of one or more executable programs for execution by programmable circuitry such as the programmable circuitry 2312 shown in the example programmable circuitry platform 2300 discussed below in connection with FIG. 23 and/or may be one or more function(s) or portion(s) of functions to be performed by the example programmable circuitry (e.g., an FPGA) discussed below in connection with FIGS. 24 and/or 25. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart(s) illustrated in FIGS. 7-9 and/or 15-22, many other methods of implementing the example chiplet 204, the one or more example core chiplets 206, the one or more example memory and I/O controllers 208, and/or the example HI circuit 222 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine-executable instructions. For example, the machine-readable instructions may be fragmented and stored on one or more storage devices, disks, and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine-executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable, and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 7-9 and 15-22 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic, and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIGS. 15-22 illustrate example processes to ensure that transactions between a TDI of the chiplet 204 and other components of the SiP 200 remain confidential and secure. FIG. 15 is a flowchart representative of example machine-readable instructions and/or example operations 1500 that may be executed, instantiated, and/or performed by example programmable circuitry to implement the HI circuit 222 of FIG. 10 to issue a memory read request. The example machine-readable instructions and/or the example operations 1500 of FIG. 15 begin at block 1502.

In the illustrated example of FIG. 15, at block 1502, the trusted DMA circuit 1020 issues a memory read request. At block 1504, the upstream trusted logic circuit 1026 determines if a TDI corresponding to the memory read request is in a run state. Based on (e.g., in response to) the upstream trusted logic circuit 1026 determining that the TDI corresponding to the memory read request is not in the run state (block 1504: NO), the machine-readable instructions and/or the operations 1500 proceed to block 1506.

In the illustrated example of FIG. 15, at block 1506, the upstream trusted logic circuit 1026 does not send a packet (e.g., a TLP) for the memory read request. Based on (e.g., in response to) the upstream trusted logic circuit 1026 determining that the TDI corresponding to the memory read request is in the run state (block 1504: YES), the machine-readable instructions and/or the operations 1500 proceed to block 1508. At block 1508, the upstream trusted logic circuit 1026 sets a T-bit of a packet (e.g., a TLP) for the memory read request to be equal to one. At block 1510, the upstream trusted logic circuit 1026 sends the packet (e.g., TLP). For example, the upstream trusted logic circuit 1026 sends the packet to a memory fabric of the SiP 200 (e.g., the one or more memory and I/O controllers 208).

FIG. 16 is a flowchart representative of example machine-readable instructions and/or example operations 1600 that may be executed, instantiated, and/or performed by example programmable circuitry to implement the chiplet 204 of FIG. 10 to process incoming memory read completions from the memory 202. The example machine-readable instructions and/or the example operations 1600 of FIG. 16 begin at block 1602. For example, at block 1602, the downstream trusted logic circuit 1028 receives a completion corresponding to a memory read request.

In the illustrated example of FIG. 16, at block 1604, the downstream trusted logic circuit 1028 determines if the memory read request was sent when a TDI corresponding to the memory read request was in a run state. Based on (e.g., in response to) the downstream trusted logic circuit 1028 determining that the memory read request was not sent when the TDI was in the run state (block 1604: NO), the machine-readable instructions and/or the operations 1600 proceed to block 1606. At block 1606, the TDISP processor circuit 1034 logs an error and at block 1608, the TDISP processor circuit 1034 transitions the TDI to an error state.

In the illustrated example of FIG. 16, based on (e.g., in response to) the downstream trusted logic circuit 1028 determining that the memory read request was sent when the TDI was in the run state (block 1604: YES), the machine-readable instructions and/or the operations 1600 proceed to block 1610. At block 1610, the downstream trusted logic circuit 1028 determines if the TDI is in the run state. Based on (e.g., in response to) the downstream trusted logic circuit 1028 determining that the TDI is not in the run state (block 1610: NO), the machine-readable instructions and/or the operations 1600 proceed to block 1612.

In the illustrated example of FIG. 16, at block 1612, the downstream trusted logic circuit 1028 rejects the completion. Based on (e.g., in response to) the downstream trusted logic circuit 1028 determining that the TDI is in the run state (block 1610: YES), the machine-readable instructions and/or the operations 1600 proceed to block 1614. At block 1614, the downstream trusted logic circuit 1028 processes the completion, ignoring a value of a T-bit in the completion.

FIG. 17 is a flowchart representative of example machine-readable instructions and/or example operations 1700 that may be executed, instantiated, and/or performed by example programmable circuitry to implement the HI circuit 222 of FIG. 10 to issue memory write requests to the memory 202. The example machine-readable instructions and/or the example operations 1700 of FIG. 17 begin at block 1702, at which the trusted DMA circuit 1020 issues a memory write request. At block 1704, the upstream trusted logic circuit 1026 determines if the memory write request is related to an interrupt.

For example, the upstream trusted logic circuit 1026 determines if the memory write request is related to a message signaled interrupt (MSI), an MSI extended (MSI-X), and/or any other type of interrupt. Based on (e.g., in response to) the upstream trusted logic circuit 1026 determining that the memory write request is not related to an interrupt (block 1704: NO), the machine-readable instructions and/or the operations 1700 proceed to block 1706. At block 1706, the upstream trusted logic circuit 1026 sends a packet (e.g., a TLP) for the memory write request. For example, the upstream trusted logic circuit 1026 sends the packet to a memory fabric of the SiP 200 (e.g., the one or more memory and I/O controllers 208).

In the illustrated example of FIG. 17, based on (e.g., in response to) the upstream trusted logic circuit 1026 determining that the memory write request is related to an interrupt (block 1704: YES), the machine-readable instructions and/or the operations 1700 proceed to block 1708. At block 1708, the upstream trusted logic circuit 1026 determines if a TDI corresponding to the memory write request is in a run state. Based on (e.g., in response to) the upstream trusted logic circuit 1026 determining that the TDI corresponding to the memory write request is not in the run state (block 1708: NO), the machine-readable instructions and/or the operations 1700 proceed to block 1710.

In the illustrated example of FIG. 17, at block 1710, the upstream trusted logic circuit 1026 does not send a packet (e.g., a TLP) for the memory write request. Based on (e.g., in response to) the upstream trusted logic circuit 1026 determining that the TDI corresponding to the memory write request is in the run state (block 1708: YES), the machine-readable instructions and/or the operations 1700 proceed to block 1712. At block 1712, the upstream trusted logic circuit 1026 sets a T-bit of a packet (e.g., a TLP) for the memory write request to be equal to one. At block 1714, the upstream trusted logic circuit 1026 sends the packet (e.g., TLP). For example, the upstream trusted logic circuit 1026 sends the packet to a memory fabric of the SiP 200 (e.g., the one or more memory and I/O controllers 208).

FIG. 18 is a flowchart representative of example machine-readable instructions and/or example operations 1800 that may be executed, instantiated, and/or performed by example programmable circuitry to implement the HI circuit 222 of FIG. 10 to handle a memory access request from a host of the SiP 200. For example, the host of the SiP 200 can read local SRAM and/or one or more registers of the chiplet 204 using MMIO access. The example machine-readable instructions and/or the example operations 1800 of FIG. 18 begin at block 1802.

In the illustrated example of FIG. 18, at block 1802, the downstream trusted logic circuit 1028 receives a memory access request. For example, the downstream trusted logic circuit 1028 receives the memory access request from the host of the SiP 200 to access memory of the one or more accelerator circuits 220 (e.g., the CRM region 218, local SRAM of the one or more accelerator circuits 220, etc.). At block 1804, the downstream trusted logic circuit 1028 determines if the memory access request is requesting access to a TEE.

In the illustrated example of FIG. 18, based on (e.g., in response to) the downstream trusted logic circuit 1028 determining that the memory access request is not requesting access to a TEE (block 1804: NO), the machine-readable instructions and/or the operations 1800 proceed to block 1812. Based on (e.g., in response to) the downstream trusted logic circuit 1028 determining that the memory access request is requesting access to a TEE (block 1804: YES), the machine-readable instructions and/or the operations 1800 proceed to block 1806. At block 1806, the downstream trusted logic circuit 1028 determines if a TDI corresponding to the memory access request is in a run state.

In the illustrated example of FIG. 18, based on (e.g., in response to) the downstream trusted logic circuit 1028 determining that the TDI is not in the run state (block 1806: NO), the machine-readable instructions and/or the operations 1800 proceed to block 1808. At block 1808, the downstream trusted logic circuit 1028 rejects the memory access request. Based on (e.g., in response to) the downstream trusted logic circuit 1028 determining that the TDI is in the run state (block 1806: YES), the machine-readable instructions and/or the operations 1800 proceed to block 1810.

In the illustrated example of FIG. 18, at block 1810, the downstream trusted logic circuit 1028 determines if a T-bit of the memory access request is equal to one. Based on (e.g., in response to) the downstream trusted logic circuit 1028 determining that the T-bit is not equal to one (block 1810: NO), the machine-readable instructions and/or the operations 1800 proceed to block 1808. Based on (e.g., in response to) the downstream trusted logic circuit 1028 determining that the T-bit is equal to one (block 1810: YES), the machine-readable instructions and/or the operations 1800 proceed to block 1812. At block 1812, the downstream trusted logic circuit 1028 processes the memory access request.

As described above in FIG. 18, when a memory access request is requesting access to a TEE, the downstream trusted logic circuit 1028 processes the memory access request if (1) a TDI corresponding to the memory access request is in a run state and (2) a T-bit of the memory access request is equal to one. Otherwise, the downstream trusted logic circuit 1028 rejects and does not process the memory access request. When a memory access request is not requesting access to a TEE, the downstream trusted logic circuit 1028 processes the memory access request.

FIG. 19 is a flowchart representative of example machine-readable instructions and/or example operations 1900 that may be executed, instantiated, and/or performed by example programmable circuitry to implement the HI circuit 222 of FIG. 10 to generate a completion for a memory access request from a host of the SiP 200. The example machine-readable instructions and/or the example operations 1900 of FIG. 19 begin at block 1902, at which the downstream trusted logic circuit 1028 processes a completion for a memory access request. At block 1904, the downstream trusted logic circuit 1028 sets a T-bit of the completion equal to a T-bit of the memory access request. At block 1906, the downstream trusted logic circuit 1028 sends the completion (e.g., back to the host).

FIG. 20 is a flowchart representative of example machine-readable instructions and/or example operations 2000 that may be executed, instantiated, and/or performed by example programmable circuitry to implement the chiplet 204 of FIG. 10 to issue memory ATS translation requests to the memory 202. In the example of FIG. 20, the example machine-readable instructions and/or the example operations 2000 are performed if the HI circuit 222 supports ATS and ATS is enabled. The example machine-readable instructions and/or the example operations 2000 of FIG. 20 begin at block 2002, at which the ATS trusted logic circuit 1030 creates an ATS translation request with a T-bit equal to one.

In the illustrated example of FIG. 20, at block 2004, the ATS trusted logic circuit 1030 determines if a TDI corresponding to the ATS translation request is in a run state. Based on (e.g., in response to) the ATS trusted logic circuit 1030 determining that the TDI corresponding to the ATS translation request is not in the run state (block 2004: NO), the machine-readable instructions and/or the operations 2000 proceed to block 2006. At block 2006, the upstream trusted logic circuit 1026 does not send the ATS translation request.

In the illustrated example of FIG 20, based on (e.g., in response to) the ATS trusted logic circuit 1030 determining that the TDI corresponding to the ATS translation request is in the run state (block 2004: YES), the machine-readable instructions and/or the operations 2000 proceed to block 2008. At block 2008, the upstream trusted logic circuit 1026 determines if a T-bit for the ATS translation request is equal to one. Based on (e.g., in response to) the upstream trusted logic circuit 1026 determining that the T-bit for the ATS translation request is not equal to one (block 2008: NO), the machine-readable instructions and/or the operations 2000 proceed to block 2010.

In the illustrated example of FIG. 20, at block 2010, the TDISP processor circuit 1034 logs an error and at block 2012, the TDISP processor circuit 1034 transitions the TDI to an error state. Based on (e.g., in response to) the upstream trusted logic circuit 1026 determining that the T-bit for the ATS translation request is equal to one (block 2008: YES), the machine-readable instructions and/or the operations 2000 proceed to block 2014. At block 2014, the upstream trusted logic circuit 1026 sends the ATS translation request. For example, the upstream trusted logic circuit 1026 sends the ATS translation request to a memory fabric of the SiP 200 (e.g., the one or more memory and I/O controllers 208).

FIG. 21 is a flowchart representative of example machine-readable instructions and/or example operations 2100 that may be executed, instantiated, and/or performed by example programmable circuitry to implement the chiplet 204 of FIG. 10 to issue a translated memory access request. In the example of FIG. 21, the example machine-readable instructions and/or the example operations 2100 are performed if the HI circuit 222 supports ATS and ATS is enabled. The example machine-readable instructions and/or the example operations 2100 of FIG. 21 begin at block 2102, at which the ATS trusted logic circuit 1030 creates a translated memory request (e.g., a write request, a read request, etc.).

In the illustrated example of FIG. 21, at block 2104, the ATS trusted logic circuit 1030 determines if a TDI corresponding to the translated memory access request is in a run state. Based on (e.g., in response to) the ATS trusted logic circuit 1030 determining that the TDI corresponding to the translated memory access request is not in the run state (block 2104: NO), the machine-readable instructions and/or the operations 2100 proceed to block 2106. At block 2106, the TDISP processor circuit 1034 logs an error and at block 2108, the TDISP processor circuit 1034 transitions the TDI to an error state.

In the illustrated example of FIG 21, based on (e.g., in response to) the ATS trusted logic circuit 1030 determining that the TDI corresponding to the translated memory access request is in the run state (block 2104: YES), the machine-readable instructions and/or the operations 2100 proceed to block 2110. At block 2110, the upstream trusted logic circuit 1026 determines if a T-bit for the translated memory access request is equal to one. Based on (e.g., in response to) the upstream trusted logic circuit 1026 determining that the T-bit for the translated memory access request is not equal to one (block 2110: NO), the machine-readable instructions and/or the operations 2100 proceed to block 2106.

In the illustrated example of FIG. 21, based on (e.g., in response to) the upstream trusted logic circuit 1026 determining that the T-bit for the translated memory access request is equal to one (block 2110: YES), the machine-readable instructions and/or the operations 2100 proceed to block 2112. At block 2112, the upstream trusted logic circuit 1026 sends the translated memory access request. For example, the upstream trusted logic circuit 1026 sends the translated memory access request to a memory fabric of the SiP 200 (e.g., the one or more memory and I/O controllers 208).

FIG. 22 is a flowchart representative of example machine-readable instructions and/or example operations 2200 that may be executed, instantiated, and/or performed by example programmable circuitry to implement the chiplet 204 of FIG. 10 to process incoming memory access completions with translated addresses. In the example of FIG. 22, the example machine-readable instructions and/or the example operations 2200 are performed if the HI circuit 222 supports ATS and ATS is enabled. The example machine-readable instructions and/or the example operations 2200 of FIG. 22 begin at block 2202, at which the downstream trusted logic circuit 1028 receives a completion for a translated memory access request (e.g., a memory access request that utilized a translated address).

In the illustrated example of FIG. 22, at block 2204, the downstream trusted logic circuit 1028 determines if the translated memory access request was sent when a TDI corresponding to the translated memory access request was in a run state. Based on (e.g., in response to) the downstream trusted logic circuit 1028 determining that the translated memory access request was not sent when the TDI was in the run state (block 2204: NO), the machine-readable instructions and/or the operations 2200 proceed to block 2206. At block 2206, the TDISP processor circuit 1034 logs an error and at block 2208, the TDISP processor circuit 1034 transitions the TDI to an error state.

In the illustrated example of FIG. 22, based on (e.g., in response to) the downstream trusted logic circuit 1028 determining that the translated memory access request was sent when the TDI was in the run state (block 2204: YES), the machine-readable instructions and/or the operations 2200 proceed to block 2210. At block 2210, the downstream trusted logic circuit 1028 determines if a T-bit for the completion is equal to one. Based on (e.g., in response to) the downstream trusted logic circuit 1028 determining that the T-bit for the completion is not equal to one (block 2210: NO), the machine-readable instructions and/or the operations 2200 proceed to block 2212.

In the illustrated example of FIG. 22, based on (e.g., in response to) the downstream trusted logic circuit 1028 determining that the T-bit for the completion is equal to one (block 2210: YES), the machine-readable instructions and/or the operations 2200 proceed to block 2212. In other words, at block 2210, the downstream trusted logic circuit 1028 verifies that the completion includes a T-bit. In the example of FIG. 22, as described above, regardless of the value of the T-bit of the completion, the machine-readable instructions and/or the operations 2200 proceed to block 2212. At block 2212, the downstream trusted logic circuit 1028 processes the completion, treating the T-bit as if it were equal to zero.

FIG. 23 is a block diagram of an example programmable circuitry platform 2300 structured to execute and/or instantiate the example machine-readable instructions and/or the example operations of FIGS. 7-9 and/or 15-22 to implement the chiplet 204, the one or more core chiplets 206, the one or more memory and I/O controllers 208, and/or the HI circuit 222 of FIGS. 2-6 and/or 10. The programmable circuitry platform 2300 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 2300 of the illustrated example includes programmable circuitry 2312. The programmable circuitry 2312 of the illustrated example is hardware. For example, the programmable circuitry 2312 can be implemented by one or more integrated circuits, logic circuits, FPGAs, microprocessors, CPUs, GPUs, DSPs, and/or microcontrollers from any desired family or manufacturer. The programmable circuitry 2312 may be implemented by one or more semiconductor based (e.g., silicon based) devices. In this example, the programmable circuitry 2312 implements the one or more example accelerator circuits 220, the example HI circuit 222, the one or more example CRM RRs 224, the example disallowed CRM logic circuit 226, the example CDSM control circuit 1002, the example reset logic circuit 1004, the example trusted AT logic circuit 1006, and/or, more generally, the example chiplet 204 of FIGS. 2-6 and/or 10 and/or the example BIOS circuit 214, the example trusted firmware 216, the example access block logic circuit 242, and/or, more generally, the one or more example core chiplets 206 of FIGS. 2-6 and/or the one or more example memory control circuits 228, the example cache stack logic circuit 230, the first example I/O stack logic circuit 232, the second example I/O stack logic circuit 234, the third example I/O stack logic circuit 236, the one or more example memory fabric decoder circuits 238, the example memory fabric CRM agent circuit 240, and/or, more generally, the one or more example memory and I/O controllers 208 of FIGS. 2-6.

In the illustrated example of FIG. 23, the example HI circuit 222 includes the one or more example DVSEC registers 1008, the example DOE mailbox 1010, the one or more example configurable registers 1042, the one or more example device identifier registers 1044, the one or more example PF registers 1046, the one or more example VF registers 1048, the one or more example CRM RRs 224, and/or, more generally, the one or more BARs 1012, the example lock logic circuit 1014, the example access detect logic circuit 1016, the example TDISP state 1024, the example upstream trusted logic circuit 1026, the example downstream trusted logic circuit 1028, the example ATS trusted logic circuit 1030, and/or, more generally, the example TDX security circuit 1018, the example trusted DMA circuit 1020, the example CXL.Cache trusted logic circuit 1022. Additionally, in the example of FIG. 23, the example CDSM control circuit 1002 includes the example SPDM processor circuit 1032, the example TDISP processor circuit 1034, and the example secure boot logic circuit 1036. In the example of FIG. 23, the trusted AT logic circuit 1006 includes the example AT logic circuit 1038 and the example DTLB 1040.

The programmable circuitry 2312 of the illustrated example includes a local memory 2313 (e.g., a cache, registers, etc.). The programmable circuitry 2312 of the illustrated example is in communication with main memory 2314, 2316, which includes a volatile memory 2314 and a non-volatile memory 2316, by a bus 2318. The volatile memory 2314 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2316 may be implemented by flash memory and/or any other desired type of memory device. Access to the main memory 2314, 2316 of the illustrated example is controlled by a memory controller 2317. In some examples, the memory controller 2317 may be implemented by one or more integrated circuits, logic circuits, microcontrollers from any desired family or manufacturer, or any other type of circuitry to manage the flow of data going to and from the main memory 2314, 2316.

The programmable circuitry platform 2300 of the illustrated example also includes interface circuitry 2320. The interface circuitry 2320 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 2322 are connected to the interface circuitry 2320. The input device(s) 2322 permit(s) a user (e.g., a human user, a machine user, etc.) to enter data and/or commands into the programmable circuitry 2312. The input device(s) 2322 can be implemented by, for example, an audio sensor, a microphone, a camera (still or video), a keyboard, a button, a mouse, a touchscreen, a trackpad, a trackball, an isopoint device, and/or a voice recognition system.

One or more output devices 2324 are also connected to the interface circuitry 2320 of the illustrated example. The output device(s) 2324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2320 of the illustrated example, thus, typically includes a graphics driver card, a graphics driver chip, and/or graphics processor circuitry such as a GPU.

The interface circuitry 2320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2326. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2300 of the illustrated example also includes one or more mass storage discs or devices 2328 to store firmware, software, and/or data. Examples of such mass storage discs or devices 2328 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 2332, which may be implemented by the machine-readable instructions of FIGS. 7-9 and/or 15-22, may be stored in the mass storage device 2328, in the volatile memory 2314, in the non-volatile memory 2316, and/or on at least one non-transitory computer-readable storage medium such as a CD or DVD which may be removable.

FIG. 24 is a block diagram of an example implementation of the programmable circuitry 2312 of FIG. 23. In this example, the programmable circuitry 2312 of FIG. 23 is implemented by a microprocessor 2400. For example, the microprocessor 2400 may be a general-purpose microprocessor (e.g., general-purpose microprocessor circuitry). The microprocessor 2400 executes some or all of the machine-readable instructions of the flowcharts of FIGS. 7-9 and/or 15-22 to effectively instantiate the circuitry of FIGS. 2-6 and/or 10 as logic circuits to perform operations corresponding to those machine-readable instructions. In some such examples, the circuitry of FIGS. 2-6 and/or 10 is instantiated by the hardware circuits of the microprocessor 2400 in combination with the machine-readable instructions. For example, the microprocessor 2400 may be implemented by multi-core hardware circuitry such as a CPU, a DSP, a GPU, an XPU, etc. Although it may include any number of example cores 2402 (e.g., 1 core), the microprocessor 2400 of this example is a multi-core semiconductor device including N cores. The cores 2402 of the microprocessor 2400 may operate independently or may cooperate to execute machine-readable instructions. For example, machine code corresponding to a firmware program, an embedded software program, or a software program may be executed by one of the cores 2402 or may be executed by multiple ones of the cores 2402 at the same or different times. In some examples, the machine code corresponding to the firmware program, the embedded software program, or the software program is split into threads and executed in parallel by two or more of the cores 2402. The software program may correspond to a portion or all of the machine-readable instructions and/or operations represented by the flowcharts of FIGS. 7-9 and/or 15-22.

The cores 2402 may communicate by a first example bus 2404. In some examples, the first bus 2404 may be implemented by a communication bus to effectuate communication associated with one(s) of the cores 2402. For example, the first bus 2404 may be implemented by at least one of an Inter-Integrated Circuit (I2C) bus, a Serial Peripheral Interface (SPI) bus, a PCI bus, or a PCIe bus. Additionally or alternatively, the first bus 2404 may be implemented by any other type of computing or electrical bus. The cores 2402 may obtain data, instructions, and/or signals from one or more external devices by example interface circuitry 2406. The cores 2402 may output data, instructions, and/or signals to the one or more external devices by the interface circuitry 2406. Although the cores 2402 of this example include example local memory 2420 (e.g., Level 1 (L1) cache that may be split into an L1 data cache and an L1 instruction cache), the microprocessor 2400 also includes example shared memory 2410 that may be shared by the cores (e.g., Level 2 (L2 cache)) for high-speed access to data and/or instructions. Data and/or instructions may be transferred (e.g., shared) by writing to and/or reading from the shared memory 2410. The local memory 2420 of each of the cores 2402 and the shared memory 2410 may be part of a hierarchy of storage devices including multiple levels of cache memory and the main memory (e.g., the main memory 2314, 2316 of FIG. 23). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 2402 may be referred to as a CPU, DSP, GPU, etc., or any other type of hardware circuitry. Each core 2402 includes control unit circuitry 2414, arithmetic and logic (AL) circuitry 2416 (sometimes referred to as an ALU), a plurality of registers 2418, the local memory 2420, and a second example bus 2422. Other structures may be present. For example, each core 2402 may include vector unit circuitry, single instruction multiple data (SIMD) unit circuitry, load/store unit (LSU) circuitry, branch/jump unit circuitry, floating-point unit (FPU) circuitry, etc. The control unit circuitry 2414 includes semiconductor-based circuits structured to control (e.g., coordinate) data movement within the corresponding core 2402. The AL circuitry 2416 includes semiconductor-based circuits structured to perform one or more mathematic and/or logic operations on the data within the corresponding core 2402. The AL circuitry 2416 of some examples performs integer-based operations. In other examples, the AL circuitry 2416 also performs floating-point operations. In yet other examples, the AL circuitry 2416 may include first AL circuitry that performs integer-based operations and second AL circuitry that performs floating-point operations. In some examples, the AL circuitry 2416 may be referred to as an Arithmetic Logic Unit (ALU).

The registers 2418 are semiconductor-based structures to store data and/or instructions such as results of one or more of the operations performed by the AL circuitry 2416 of the corresponding core 2402. For example, the registers 2418 may include vector register(s), SIMD register(s), general-purpose register(s), flag register(s), segment register(s), machine-specific register(s), instruction pointer register(s), control register(s), debug register(s), memory management register(s), machine check register(s), etc. The registers 2418 may be arranged in a bank as shown in FIG. 24. Alternatively, the registers 2418 may be organized in any other arrangement, format, or structure, such as by being distributed throughout the core 2402 to shorten access time. The second bus 2422 may be implemented by at least one of an I2C bus, a SPI bus, a PCI bus, or a PCIe bus.

Each core 2402 and/or, more generally, the microprocessor 2400 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 2400 is a semiconductor device fabricated to include many transistors interconnected to implement the structures described above in one or more integrated circuits (ICs) contained in one or more packages.

The microprocessor 2400 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 2400, in the same chip package as the microprocessor 2400 and/or in one or more separate packages from the microprocessor 2400.

FIG. 25 is a block diagram of another example implementation of the programmable circuitry 2312 of FIG. 23. In this example, the programmable circuitry 2312 is implemented by FPGA circuitry 2500. For example, the FPGA circuitry 2500 may be implemented by an FPGA. The FPGA circuitry 2500 can be used, for example, to perform operations that could otherwise be performed by the example microprocessor 2400 of FIG. 24 executing corresponding machine-readable instructions. However, once configured, the FPGA circuitry 2500 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 2400 of FIG. 24 described above (which is a general purpose device that may be programmed to execute some or all of the machine-readable instructions represented by the flowchart(s) of FIGS. 7-9 and/or 15-22 but whose interconnections and logic circuitry are fixed once fabricated), the FPGA circuitry 2500 of the example of FIG. 25 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 7-9 and/or 15-22. In particular, the FPGA circuitry 2500 may be thought of as an array of logic gates, interconnections, and switches. The switches can be programmed to change how the logic gates are interconnected by the interconnections, effectively forming one or more dedicated logic circuits (unless and until the FPGA circuitry 2500 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 7-9 and/or 15-22. As such, the FPGA circuitry 2500 may be configured and/or structured to effectively instantiate some or all of the operations/functions corresponding to the machine-readable instructions of the flowchart(s) of FIGS. 7-9 and/or 15-22 as dedicated logic circuits to perform the operations/functions corresponding to those software instructions in a dedicated manner analogous to an ASIC. Therefore, the FPGA circuitry 2500 may perform the operations/functions corresponding to the some or all of the machine-readable instructions of FIGS. 7-9 and/or 15-22 faster than the general-purpose microprocessor can execute the same.

In the example of FIG. 25, the FPGA circuitry 2500 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 2500 of FIG. 25 may access and/or load the binary file to cause the FPGA circuitry 2500 of FIG. 25 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2500 of FIG. 25 to cause configuration and/or structuring of the FPGA circuitry 2500 of FIG. 25, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 2500 of FIG. 25 may access and/or load the binary file to cause the FPGA circuitry 2500 of FIG. 25 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2500 of FIG. 25 to cause configuration and/or structuring of the FPGA circuitry 2500 of FIG. 25, or portion(s) thereof.

The FPGA circuitry 2500 of FIG. 25, includes example input/output (I/O) circuitry 2502 to obtain and/or output data to/from example configuration circuitry 2504 and/or external hardware 2506. For example, the configuration circuitry 2504 may be implemented by interface circuitry that may obtain a binary file, which may be implemented by a bit stream, data, and/or machine-readable instructions, to configure the FPGA circuitry 2500, or portion(s) thereof. In some such examples, the configuration circuitry 2504 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 2506 may be implemented by external hardware circuitry. For example, the external hardware 2506 may be implemented by the microprocessor 2400 of FIG. 24.

The FPGA circuitry 2500 also includes an array of example logic gate circuitry 2508, a plurality of example configurable interconnections 2510, and example storage circuitry 2512. The logic gate circuitry 2508 and the configurable interconnections 2510 are configurable to instantiate one or more operations/functions that may correspond to at least some of the machine-readable instructions of FIGS. 7-9 and/or 15-22 and/or other desired operations. The logic gate circuitry 2508 shown in FIG. 25 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2508 to enable configuration of the electrical structures and/or the logic gates to form circuits to perform desired operations/functions. The logic gate circuitry 2508 may include other electrical structures such as look-up tables (LUTs), registers (e.g., flip-flops or latches), multiplexers, etc.

The configurable interconnections 2510 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2508 to program desired logic circuits.

The storage circuitry 2512 of the illustrated example is structured to store result(s) of the one or more of the operations performed by corresponding logic gates. The storage circuitry 2512 may be implemented by registers or the like. In the illustrated example, the storage circuitry 2512 is distributed amongst the logic gate circuitry 2508 to facilitate access and increase execution speed.

The example FPGA circuitry 2500 of FIG. 25 also includes example dedicated operations circuitry 2514. In this example, the dedicated operations circuitry 2514 includes special purpose circuitry 2516 that may be invoked to implement commonly used functions to avoid the need to program those functions in the field. Examples of such special purpose circuitry 2516 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2500 may also include example general purpose programmable circuitry 2518 such as an example CPU 2520 and/or an example DSP 2522. Other general purpose programmable circuitry 2518 may additionally or alternatively be present such as a GPU, an XPU, etc., that can be programmed to perform other operations.

Although FIGS. 24 and 25 illustrate two example implementations of the programmable circuitry 2312 of FIG. 23, many other approaches are contemplated. For example, FPGA circuitry may include an on-board CPU, such as one or more of the example CPU 2520 of FIG. 24. Therefore, the programmable circuitry 2312 of FIG. 23 may additionally be implemented by combining at least the example microprocessor 2400 of FIG. 24 and the example FPGA circuitry 2500 of FIG. 25. In some such hybrid examples, one or more cores 2402 of FIG. 24 may execute a first portion of the machine-readable instructions represented by the flowchart(s) of FIGS. 7-9 and/or 15-22 to perform first operation(s)/function(s), the FPGA circuitry 2500 of FIG. 25 may be configured and/or structured to perform second operation(s)/function(s) corresponding to a second portion of the machine-readable instructions represented by the flowcharts of FIGS. 7-9 and/or 15-22, and/or an ASIC may be configured and/or structured to perform third operation(s)/function(s) corresponding to a third portion of the machine-readable instructions represented by the flowcharts of FIGS. 7-9 and/or 15-22.

It should be understood that some or all of the circuitry of FIGS. 2-6 and/or 10 may, thus, be instantiated at the same or different times. For example, same and/or different portion(s) of the microprocessor 2400 of FIG. 24 may be programmed to execute portion(s) of machine-readable instructions at the same and/or different times. In some examples, same and/or different portion(s) of the FPGA circuitry 2500 of FIG. 25 may be configured and/or structured to perform operations/functions corresponding to portion(s) of machine-readable instructions at the same and/or different times.

In some examples, some or all of the circuitry of FIGS. 2-6 and/or 10 may be instantiated, for example, in one or more threads executing concurrently and/or in series. For example, the microprocessor 2400 of FIG. 24 may execute machine-readable instructions in one or more threads executing concurrently and/or in series. In some examples, the FPGA circuitry 2500 of FIG. 25 may be configured and/or structured to carry out operations/functions concurrently and/or in series. Moreover, in some examples, some or all of the circuitry of FIGS. 2-6 and/or 10 may be implemented within one or more virtual machines and/or containers executing on the microprocessor 2400 of FIG. 24.

In some examples, the programmable circuitry 2312 of FIG. 23 may be in one or more packages. For example, the microprocessor 2400 of FIG. 24 and/or the FPGA circuitry 2500 of FIG. 25 may be in one or more packages. In some examples, an XPU may be implemented by the programmable circuitry 2312 of FIG. 23, which may be in one or more packages. For example, the XPU may include a CPU (e.g., the microprocessor 2400 of FIG. 24, the CPU 2520 of FIG. 25, etc.) in one package, a DSP (e.g., the DSP 2522 of FIG. 25) in another package, a GPU in yet another package, and an FPGA (e.g., the FPGA circuitry 2500 of FIG. 25) in still yet another package.

A block diagram illustrating an example software distribution platform 2605 to distribute software such as the example machine-readable instructions 2332 of FIG. 23 to other hardware devices (e.g., hardware devices owned and/or operated by third parties from the owner and/or operator of the software distribution platform) is illustrated in FIG. 26. The example software distribution platform 2605 may be implemented by any computer server, data facility, cloud service, etc., capable of storing and transmitting software to other computing devices. The third parties may be customers of the entity owning and/or operating the software distribution platform 2605. For example, the entity that owns and/or operates the software distribution platform 2605 may be a developer, a seller, and/or a licensor of software such as the example machine-readable instructions 2332 of FIG. 23. The third parties may be consumers, users, retailers, OEMs, etc., who purchase and/or license the software for use and/or re-sale and/or sub-licensing. In the illustrated example, the software distribution platform 2605 includes one or more servers and one or more storage devices. The storage devices store the machine-readable instructions 2332, which may correspond to the example machine-readable instructions of FIGS. 7-9 and/or 15-22, as described above. The one or more servers of the example software distribution platform 2605 are in communication with an example network 2610, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 2332 from the software distribution platform 2605. For example, the software, which may correspond to the example machine-readable instructions of FIGS. 7-9 and/or 15-22, may be downloaded to the example programmable circuitry platform 2300, which is to execute the machine-readable instructions 2332 to implement the chiplet 204, the one or more core chiplets 206, the one or more memory and I/O controllers 208, and/or the HI circuit 222. In some examples, one or more servers of the software distribution platform 2605 periodically offer, transmit, and/or force updates to the software (e.g., the example machine-readable instructions 2332 of FIG. 23) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," "fourth," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and/or methods have been disclosed that enable cost-effective (e.g., monetary cost, physical space consumption cost, processor cycle efficiency, etc.) and power efficient AI at the edge. Disclosed methods, apparatus, and/or articles of manufacture include an XPU that provides AI accelerator interfacing without increasing memory cost and/or power consumption. For example, because some example SiPs described above do not include a dedicated memory slot or memory device for each accelerator circuit, but instead utilize a shared (e.g., system) memory as described above, such examples disclosed herein reduce platform cost and/or power consumption.

Examples disclosed herein improve (e.g., reduce) total cost of ownership (TCO) of SiPs deployed at the edge. Examples disclosed herein also reduce research and development costs (e.g., for design, validation, etc.) since the example design of a SiP including multiple integrated accelerator circuits may be optimized. Additionally, examples disclosed herein include a memory and interconnect fabric system for secure memory reservation and confidential access from multi-chiplet AI accelerator circuits on a disaggregated edge XPU.

As described above, examples disclosed herein include chiplet-based AI accelerator circuits using multiple data paths (e.g., via CXL.$/UCIe and CXL.IO/PCIe interfaces) simultaneously to access dedicated memory regions. Additionally, examples disclosed herein include secure access control. For example, disclosed methods, apparatus, and/or articles of manufacture prevent access to a chiplet reserved memory pool region from other entities, including cores on a core chiplet, circuits on a memory and I/O controller, and from other circuits (e.g., accelerator circuits) on the same or other chiplets within and/or external to the package. Accordingly, disclosed systems, apparatus, articles of manufacture, and/or methods improve the efficiency of a computing device by improving performance without increasing power consumption, by facilitating communication between an integrated accelerator circuit and a host memory fabric over data paths simultaneously utilizing multiple protocols, and/or by securing communication between integrated devices and dedicated regions of system memory.

Some examples disclosed herein include a confidential computing device security architecture for multi-tile disaggregated SiP AI processor circuits, accelerator circuits, and/or I/O devices. For example, disclosed methods, apparatus, and/or articles of manufacture include an architecture for multi-tile accelerator circuits (e.g., AI, GPU, TPU, etc. accelerator circuits) on a disaggregated SiP that connect over multiple interconnects (e.g., CXL.IO/PCIe and CXL.Cache/UCIe interconnects) and operate as RCiEP accelerator circuits and/or I/O devices. Additionally, examples disclosed herein facilitate AI at the edge.

Disclosed methods, apparatus, and/or articles of manufacture deliver security for AI workloads at the edge. In such examples, tenants of edge service providers can be confident that AI workloads deployed at the edge will remain confidential and secure. Examples disclosed herein also improve performance of confidential workloads performed at the edge.

In some examples, a tenant workload executed at the edge is sent from a device outside a trust boundary and "bounced" through a buffer in system memory into the trust boundary via encryption and decryption. Such "bounce" buffers result in up to 30% reduced performance of a workload. By securing a reserved portion of system memory as described herein, examples disclosed herein improve performance (e.g., by avoiding "bounce" buffers). Accordingly, disclosed systems, apparatus, articles of manufacture, and/or methods improve the efficiency of a computing device by providing equivalent or better security as other approaches with improved performance for confidential computing. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture for memory access for multi-chiplet system-in-package are disclosed herein. Further examples and combinations thereof include the following:
Example 1 includes a non-transitory computer-readable medium comprising instructions that cause at least one circuit in a system-in-package (SiP) to reserve a region in a memory associated with the SiP for exclusive use by a first die of the SiP apart from a second die of the SiP, the memory for use by multiple, respective, dies of the SiP.
Example 2 includes the non-transitory computer-readable medium of example 1, wherein the instructions cause one or more of the at least one circuit to permit a first circuit of the first die to access a sub-region of the region, the sub-region reserved for exclusive access by the first circuit, and deny access of a second circuit of the first die to the sub-region.
Example 3 includes the non-transitory computer-readable medium of example 2, wherein the instructions cause one or more of the at least one circuit to permit the second circuit to access the region of the memory.
Example 4 includes the non-transitory computer-readable medium of any of examples 2 or 3, wherein the sub-region is a first sub-region, and the instructions cause one or more of the at least one circuit to permit the second circuit to access a second sub-region of the region, and deny access to the second sub-region by the first circuit.
Example 5 includes the non-transitory computer-readable medium of any of examples 1, 2, 3, or 4, wherein the instructions cause one or more of the at least one circuit to divide the region into a first sub-region for exclusive use by a first circuit of the first die and a second sub-region for exclusive access by a second circuit of the first die.
Example 6 includes the non-transitory computer-readable medium of any of examples 1, 2, 3, 4, or 5, wherein the instructions cause one or more of the at least one circuit to securely access the memory using a first protocol and securely access the memory using a second protocol different than the first protocol.
Example 7 includes the non-transitory computer-readable medium of example 6, wherein the SiP includes a memory fabric, and the instructions cause one or more of the at least one circuit to transmit an identifier of the first die to the memory fabric using the first protocol, and transmit an access request for the memory to the memory fabric using the second protocol.
Example 8 includes the non-transitory computer-readable medium of any of examples 1, 2, 3, 4, 5, 6, or 7, wherein the first die includes one or more of an application specific integrated circuit, a field programmable gate array, a graphics processor unit, an infrastructure processing unit, a tensor processing unit, a neural processing unit, or a microprocessor.
Example 9 includes a semiconductor package comprising a first die, and a second die, the semiconductor package associated with a memory for use by multiple, respective, dies of the semiconductor package, the memory including a region reserved for exclusive use by the first die apart from at least one other circuit.
Example 10 includes the semiconductor package of example 9, wherein the first die includes at least two circuits and at least one first control circuit to perform a first level of access control for the region of memory, and the second die includes a second control circuit to perform a second level of access control for the region by (1) permitting access to the region by the at least two circuits and (2) denying access to the region by the at least one other circuit.
Example 11 includes the semiconductor package of any of examples 9 or 10, wherein the first die includes a first accelerator circuit, a second accelerator circuit, and an interface circuit to divide the region into a first region accessible to the first accelerator circuit and a second region accessible to the second accelerator circuit.
Example 12 includes the semiconductor package of any of examples 9 or 11, wherein the second die includes at least one processor circuit to be programmed by machine-readable instructions to reserve the region of the memory for the first die, and verify that the region does not overlap with at least one other reserved region of the memory.
Example 13 includes the semiconductor package of any of examples 9, 11, or 12, wherein the second die includes at least one processor circuit to be programmed by machine-readable instructions to populate at least one register of the first die with a range defining the region.
Example 14 includes the semiconductor package of any of examples 9, 10, or 11, wherein the second die includes a control circuit to determine whether a request to access the region includes a first identifier that matches at least a second identifier of at least one device that is permitted to access the region.
Example 15 includes the semiconductor package of any of examples 9, 10, 11, 12, 13, or 14, wherein the first die includes at least one interface circuit that is to operate based on a first protocol and a second protocol different than the first protocol, and based on a communication from at least one circuit of the first die, securely access the region with the first protocol and securely access the region with the second protocol.
Example 16 includes the semiconductor package of any of examples 9, 10, 11, 12, 13, 14, or 15, wherein the first die includes one or more of an application specific integrated circuit, a field programmable gate array, a graphics processor unit, an infrastructure processing unit, a tensor processing unit, a neural processing unit, or a microprocessor.
Example 17 includes the semiconductor package of any of examples 9, 10, 11, 12, 13, 14, 15, or 16, further including a third die including the memory.
Example 18 includes a system-in-package (SiP) comprising a first die, and a second die including at least one processor circuit to host an operating system (OS), the SiP associated with a memory for use by multiple, respective, dies of the SiP, the memory including a region reserved for use by the first die and inaccessible to the OS.
Example 19 includes the SiP of example 18, wherein the first die includes at least two circuits, and at least one circuit to permit a first circuit of the at least two circuits to access a portion of the region, and deny access of a second circuit of the at least two circuits to the portion.
Example 20 includes the SiP of any of examples 18 or 19, wherein the first die includes an interface circuit to securely access the memory using a first protocol and securely access the memory using a second protocol different than the first protocol.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A computer-readable medium comprising instructions that cause at least one circuit in a system-in-package (SiP) to reserve a region in a memory associated with the SiP for exclusive use by a first die of the SiP apart from a second die of the SiP, the memory for use by multiple, respective, dies of the SiP.

2. The computer-readable medium of claim 1, wherein the instructions cause one or more of the at least one circuit to:
permit a first circuit of the first die to access a sub-region of the region, the sub-region reserved for exclusive access by the first circuit; and
deny access of a second circuit of the first die to the sub-region.

3. The computer-readable medium of claim 2, wherein the sub-region is a first sub-region, and the instructions cause one or more of the at least one circuit to:
permit the second circuit to access a second sub-region of the region; and
deny access to the second sub-region by the first circuit.

4. The computer-readable medium of any of claims 1, 2, or 3, wherein the instructions cause one or more of the at least one circuit to divide the region into a first sub-region for exclusive use by a first circuit of the first die and a second sub-region for exclusive access by a second circuit of the first die.

5. The computer-readable medium of any of claims 1, 2, 3, or 4, wherein the instructions cause one or more of the at least one circuit to securely access the memory using a first protocol and securely access the memory using a second protocol different than the first protocol.

6. The computer-readable medium of claim 5, wherein the SiP includes a memory fabric, and the instructions cause one or more of the at least one circuit to:
transmit an identifier of the first die to the memory fabric using the first protocol; and
transmit an access request for the memory to the memory fabric using the second protocol.

7. A semiconductor package comprising:
a first die; and
a second die, the semiconductor package associated with a memory for use by multiple, respective, dies of the semiconductor package, the memory including a region reserved for exclusive use by the first die apart from at least one other circuit.

8. The semiconductor package of claim 7, wherein:
the first die includes at least two circuits and at least one first control circuit to perform a first level of access control for the region of memory; and
the second die includes a second control circuit to perform a second level of access control for the region by (1) permitting access to the region by the at least two circuits and (2) denying access to the region by the at least one other circuit.

9. The semiconductor package of any of claims 7 or 8, wherein the first die includes a first accelerator circuit, a second accelerator circuit, and an interface circuit to divide the region into a first region accessible to the first accelerator circuit and a second region accessible to the second accelerator circuit.

10. The semiconductor package of any of claims 7, 8, or 9, wherein the second die includes at least one processor circuit to be programmed by machine-readable instructions to:
reserve the region of the memory for the first die; and
verify that the region does not overlap with at least one other reserved region of the memory.

11. The semiconductor package of any of claims 7, 8, 9, or 10, wherein the second die includes at least one processor circuit to be programmed by machine-readable instructions to populate at least one register of the first die with a range defining the region.

12. The semiconductor package of any of claims 7, 8, 9, 10, or 11, wherein the second die includes a control circuit to determine whether a request to access the region includes a first identifier that matches at least a second identifier of at least one device that is permitted to access the region.

13. The semiconductor package of any of claims 7, 8, 9, 10, 11, or 12, wherein the first die includes at least one interface circuit that is to:
operate based on a first protocol and a second protocol different than the first protocol; and
based on a communication from at least one circuit of the first die, securely access the region with the first protocol and securely access the region with the second protocol.

14. The semiconductor package of any of claims 7, 8, 9, 10, 11, 12, or 13, further including a third die including the memory.

15. A method to implement the instructions of any of claims 1-6.
